(19) Europäisches Patentamt
European Patent Office
Office européen des brevets

(11) **EP 4 651 041 A1**

(12) **EUROPEAN PATENT APPLICATION**

(43) Date of publication:
**19.11.2025 Bulletin 2025/47**

(21) Application number: **25175823.1**

(22) Date of filing: **12.05.2025**

(51) International Patent Classification (IPC):
***G06N 10/70*** (2022.01)    ***G06N 10/20*** (2022.01)

(52) Cooperative Patent Classification (CPC):
**G06N 10/70; G06N 10/20**

| (84) Designated Contracting States:<br>**AL AT BE BG CH CY CZ DE DK EE ES FI FR GB**<br>**GR HR HU IE IS IT LI LT LU LV MC ME MK MT NL**<br>**NO PL PT RO RS SE SI SK SM TR**<br>Designated Extension States:<br>**BA**<br>Designated Validation States:<br>**GE KH LA MA MD TN**<br><br>(30) Priority: **15.05.2024 JP 2024079282** | (71) Applicant: **FUJITSU LIMITED**<br>**Kawasaki-shi, Kanagawa 211-8588 (JP)**<br><br>(72) Inventor: **TOSHIO, Riki**<br>**Kawasaki-shi, 211-8588 (JP)**<br><br>(74) Representative: **Haseltine Lake Kempner LLP**<br>**Cheapside House**<br>**138 Cheapside**<br>**London EC2V 6BJ (GB)** |

(54) **COMPUTER PROGRAM AND QUANTUM COMPUTATION CONTROL METHOD**

(57)    A computer determines, based on a logical rotation angle for rotating the state of a logical qubit around a predetermined axis, a physical rotation angle around the predetermined axis to be applied to d first physical qubits among a plurality of physical qubits constituting the logical qubit. The computer instructs a quantum computer including the plurality of physical qubits to execute a rotation gate operation of rotating the state of each of the d first physical qubits around the predetermined axis by the physical rotation angle. The computer specifies application of an m-qubit rotation gate to a physical qubit group in which m first physical qubits among the d first physical qubits are collected. The m-qubit rotation gate is to rotate the states of the m first physical qubits by one rotation gate operation.

FIG. 1

**Description**

FIELD

The embodiments discussed herein relate to a computer program and a quantum computation control method.

BACKGROUND

A quantum computer executes quantum computation in accordance with quantum circuits by executing gate operations on qubits. An individual qubit is the minimum unit of information used in the computation and corresponds to a bit (a classical bit) in a classical computer. However, unlike a classical bit, a qubit is able to represent a superposition state of "0" and "1".

Information about a qubit could be destroyed (an error could occur), for example, due to an interaction with an environment or an error in a gate operation. Countermeasures against such an error are quantum error correction and quantum error mitigation.

The quantum error correction is a process for detecting occurrence of an error and correcting the error through encoding (redundancy) in which a plurality of qubits are combined. Hereinafter, qubits that are not encoded will be referred to as "physical qubits", and a group of encoded qubits will be referred to as "logical qubit". The quantum error mitigation is a process in which the computation is continued with an error and the impact of the error is mitigated, for example, by modifying a quantum circuit or extrapolating a measurement result.

A quantum computer that executes quantum computation while executing the quantum error correction on logical qubits is called "fault-tolerant quantum computer (FTQC)". An FTQC is able to execute various kinds of quantum computations by combining predetermined basic gates. The predetermined basic gates are an H gate, a CNOT gate, an S gate, and a T gate. The H gate, the CNOT gate, and the S gate are quantum gates for Clifford operations, and the T gate is a quantum gate for a non-Clifford operation. A set of these basic gates is called "Clifford + T".

Among the basic gates of Clifford + T, the T gate uses a large number of physical qubits for the error correction. Therefore, an FTQC for executing useful computation needs a scale of about one million physical qubits.

As a technique for reducing the number of physical qubits used for the error correction, for example, a space-time efficient analog rotation quantum computing architecture called "STAR architecture" has been proposed. In this STAR architecture, an arbitrary rotation gate is implemented using a predetermined resource state (also referred to as "auxiliary state") and a gate teleportation circuit. The resource state is represented by redundant logical qubits. The process of preparing the resource state is called "state injection protocol" or "state preparation protocol" (hereinafter referred to as "state preparation protocol") .

Yutaro Akahoshi, Kazunori Maruyama, Hirotaka Oshima, Shintaro Sato, and Keisuke Fujii, "Partially Fault-tolerant Quantum Computing Architecture with Error-corrected Clifford Gates and Space-time Efficient Analog Rotations," arXiv:2303.13181v1, 23 Mar 2023

Hyeongrak Choi, Frederic T. Chong, Dirk Englund, Yongshan Ding, "Fault Tolerant Non-Clifford State Preparation for Arbitrary Rotations," arXiv:2303.17380v1, 30 Mar 2023

Regarding the generation of a resource state with the state preparation protocol, syndrome measurement is executed several times in the process of generating the resource state. When an error is detected by the syndrome measurement, the generation of a resource state is executed again from the beginning. If the resource state generation process is redone many times, the resource state generation efficiency deteriorates.

SUMMARY

In one aspect, it is desirable to improve the resource state generation efficiency.

In one aspect, there is provided a computer program that causes a computer to execute a process including: determining, based on a logical rotation angle for rotating a state of a logical qubit encoded with a code distance d, around a predetermined axis, a physical rotation angle around the predetermined axis to be applied to d first physical qubits among a plurality of physical qubits constituting the logical qubit, the d being an integer of 2 or more; and instructing a quantum computer including the plurality of physical qubits to execute a rotation gate operation of rotating a state of each of the d first physical qubits around the predetermined axis by the physical rotation angle, by specifying application of an m-qubit rotation gate to a physical qubit group in which m first physical qubits among the d first physical qubits are collected, the m-qubit rotation gate being to rotate states of the m first physical qubits by one rotation gate operation, the m being an integer between 2 and d, inclusive.

EP 4 651 041 A1

BRIEF DESCRIPTION OF DRAWINGS

The invention is described, by way of example only, with reference to the following drawings, in which:

FIG. 1 is a diagram illustrating an example of a quantum computation control method according to a first embodiment;
FIG. 2 is a diagram illustrating an example of a system configuration according to a second embodiment;
FIG. 3 is a diagram illustrating an example of hardware of a quantum computing system;
FIG. 4 is a diagram illustrating characteristics of qubits;
FIG. 5 is a diagram illustrating an example of quantum error correction;
FIG. 6 is a diagram illustrating an example of basic gates used for error-tolerant quantum computation;
FIG. 7 is a diagram illustrating an example of a quantum circuit that executes a gate operation of an arbitrary rotation;
FIG. 8 is a diagram illustrating an example of a state preparation protocol;
FIG. 9 is a diagram illustrating an example of combination patterns of physical qubits to be subjected to the gate operation of a transversal rotation gate;
FIG. 10 is a diagram illustrating an example of a process executed when an error occurs in the state preparation protocol;
FIG. 11 is a diagram illustrating an example of the gate operation of a transversal rotation gate;
FIG. 12 is a diagram illustrating an example of syndrome measurement after transversal rotation;
FIG. 13 is a diagram illustrating an example of a post-selection situation when an error occurs;
FIG. 14 is a diagram illustrating an example of a transversal rotation gate that collectively rotates two or more physical qubits;
FIG. 15 is a diagram illustrating an example of a quantum circuit for implementing a multi-Z rotation gate;
FIG. 16 is a diagram illustrating an example of a transversal rotation gate implemented by $R_{ZZ}(\theta)$;
FIG. 17 is a diagram illustrating an example of a transversal rotation gate in which multi-Z rotations of a plurality of weights are mixed;
FIG. 18 is a diagram illustrating an example of a hybrid method of post-selection and error correction for rotation surface codes;
FIG. 19 is a diagram illustrating an example of error patterns that are suitable to be dealt with by the post-selection;
FIG. 20 is a diagram illustrating an example of error patterns that allow omission of the post-selection;
FIG. 21 is a diagram illustrating an example of error state detection in a post-selection area;
FIG. 22 is a diagram illustrating a first case in which an error state is detected;
FIG. 23 is a diagram illustrating a second case in which an error state is detected;
FIG. 24 is a diagram illustrating an example of setting of the post-selection area;
FIG. 25 is a block diagram illustrating an example of quantum computation functions of the quantum computation system;
FIG. 26 is a block diagram illustrating an example of functions of an arbitrary rotation execution unit;
FIG. 27 is a sequence diagram illustrating an example of a process procedure of computation of a quantum circuit;
FIG. 28 is a flowchart illustrating an example of a procedure of a quantum computation process executed by a classical computer;
FIG. 29 is a flowchart illustrating an example of a procedure of a quantum circuit execution process;
FIG. 30 is a flowchart illustrating an example of a procedure of a resource state generation process;
FIG. 31 is a diagram illustrating an example of a method of implementing a transversal rotation gate based on a multi-Z rotation gate on hardware in which a 2-qubit gate is limited to only between nearest-neighbor qubits;
FIG. 32 is a diagram illustrating an example of the success probability of resource state generation when there is no error;
FIG. 33 is a diagram illustrating an example of the success probability in the pass determination of the resource state generation, using different resource state generation methods; and
FIG. 34 is a diagram illustrating an example of a comparison result of trace distances.

DESCRIPTION OF EMBODIMENTS

Hereinafter, embodiments will be described with reference to the drawings. Each embodiment may be implemented by combining a plurality of embodiments within a consistent range.

[First Embodiment]

A first embodiment is a quantum computation control method for efficiently generating a resource state used for gate teleportation.

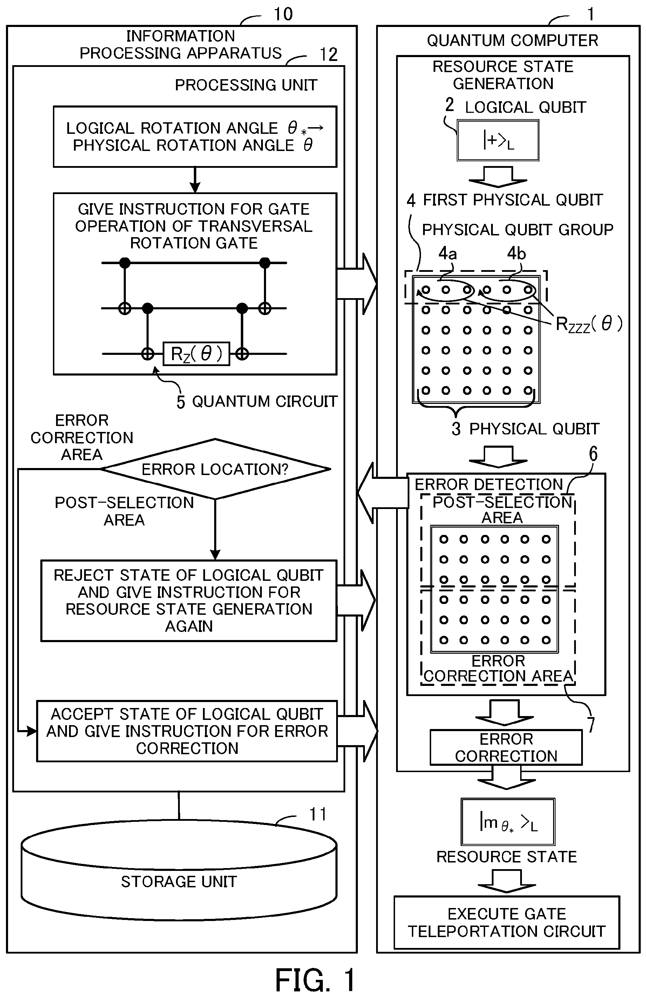

FIG. 1 is a diagram illustrating an example of a quantum computation control method according to a first embodiment. FIG. 1 illustrates an information processing apparatus 10 that implements a quantum computation control method. The information processing apparatus 10 is able to implement a quantum computation control method by executing, for example, a quantum computation control program.

The information processing apparatus 10 includes a storage unit 11 and a processing unit 12. The storage unit 11 is, for example, a memory or a storage device included in the information processing apparatus 10. The processing unit 12 is, for example, a processor or an arithmetic circuit included in the information processing apparatus 10.

The storage unit 11 stores, for example, a quantum computation control program. The storage unit 11 also stores intermediate data generated in the execution process of the quantum computation control program.

The processing unit 12 controls a quantum computer 1 in accordance with, for example, the quantum computation control program to cause the quantum computer 1 to execute quantum computation, and obtains a solution of the quantum computation. The processing unit 12 is able to execute a gate operation of an arbitrary rotation on a logical qubit in the process of the quantum computation. The processing unit 12 causes the quantum computer 1 to execute a gate operation of an arbitrary rotation based on a gate teleportation circuit. In order to execute the gate teleportation circuit, the processing unit 12 prepares a resource state with a logical qubit other than the logical qubit on which the gate operation of the arbitrary rotation is executed. For example, the processing unit 12 generates the resource state in the following procedure.

For example, the processing unit 12 changes the state of a logical qubit 2 encoded with a code distance d (d is an integer of 2 or more) to a resource state. For this purpose, the processing unit 12 determines, based on a logical rotation angle for rotating the state of the logical qubit 2 around a predetermined axis, a physical rotation angle around the predetermined axis to be applied to d first physical qubits 4 among a plurality of physical qubits 3 constituting the logical qubit 2. The embodiment assumes that the logical rotation angle is "$\theta_*$" and the physical rotation angle is "$\theta$".

The logical qubit 2 is encoded by, for example, a surface code. In addition, the first physical qubits 4 are, for example, physical qubits arranged in a line from one side to a side opposite to the one side among the plurality of physical qubits 3 arranged in a lattice shape. In the example of FIG. 1, the physical qubits in the uppermost row are the first physical qubits 4.

The processing unit 12 instructs the quantum computer 1 to execute the gate operation of a transversal rotation gate based on the determined physical rotation angle. For example, the processing unit 12 instructs the quantum computer 1 including the plurality of physical qubits 3 to execute a rotation gate operation of rotating the state of each of the first physical qubits 4 around the predetermined axis by the determined physical rotation angle.

In this case, the processing unit 12 specifies application of an m-qubit rotation gate (m is an integer between 2 and d, inclusive) to a physical qubit group 4a or 4b in which m first physical qubits among the first physical qubits 4 are collected. The m-qubit rotation gate is to rotate the states of the m first physical qubits 4 by one rotation gate operation. In the example of FIG. 1, the processing unit 12 instructs the quantum computer 1 to execute the rotation gate operation based on the 3-qubit rotation gate "$R_{ZZZ}(\theta)$" on each of the two physical qubit groups 4a and 4b in which three first physical qubits are collected.

For example, the processing unit 12 generates a quantum circuit 5 that implements the gate operation of the m-qubit rotation gate. The quantum circuit 5 includes a plurality of CNOT gates and one 1-qubit rotation gate. Next, the processing unit 12 instructs the quantum computer 1 to execute the generated quantum circuit 5.

In the quantum computer 1, the gate operation of the transversal rotation gate is executed in accordance with a command from the processing unit 12. For example, the quantum computer 1 executes a rotation gate operation of rotating the first physical qubits 4 of the logical qubit 2 in a logical $|+\rangle$ state around the predetermined axis by the physical rotation angle. In this case, the quantum computer 1 rotates the state of each of the physical qubit groups 4a and 4b by one rotation gate operation.

For example, the quantum computer 1 executes the gate operation on each of the physical qubit groups 4a and 4b in accordance with the quantum circuit 5. The quantum circuit 5 is a circuit equivalent to a 3-qubit rotation gate. The quantum circuit 5 includes only one 1-qubit rotation gate. The rotation gate operation executed in accordance with the quantum circuit 5 is only 1-qubit rotation. That is, by one rotation gate operation, three physical qubits are rotated.

After executing the rotation gate operation, the quantum computer 1 executes error detection on the logical qubit 2. For example, the quantum computer 1 measures eigenvalues of stabilizers of measurement qubits (also referred to as ancilla qubits) connected to the plurality of physical qubits 3, by using a syndrome measurement circuit.

The processing unit 12 acquires error detection results of the plurality of physical qubits 3 from the quantum computer 1. For example, when there is a measurement qubit in which the eigenvalue of the stabilizer is inverted, there is a possibility that an error has occurred in the physical qubit connected to the measurement qubit. The processing unit 12 is able to determine the location of the physical qubit in which the error has occurred based on the location of the measurement qubit in which the eigenvalue of the stabilizer is inverted.

The processing unit 12 divides the area in which the plurality of physical qubits 3 exist into a post-selection area 6 and an error correction area 7. The post-selection area 6 is an area including at least the first physical qubits 4. The post-selection area 6 includes, for example, physical qubits located within an area affected by an error that has occurred in the first physical qubits 4.

When an error in the post-selection area 6 is detected, the processing unit 12 instructs the quantum computer 1 to execute a gate operation of resetting the logical qubit 2 to the logical $|+\rangle$ state and to redo the rotation gate operation. In this case, the quantum computer 1 executes the gate operation of resetting the logical qubit 2 to the logical $|+\rangle$ state in accordance with a command, and executes the rotation gate operation on the first physical qubits 4 again.

If an error in the post-selection area 6 is not detected, the processing unit 12 accepts the state of the logical qubit 2 as a resource state "$|m_{\theta*}\rangle_L$" (* following $\theta$ is a subscript of $\theta$, the same applies hereinafter). The subscript $_L$ of the resource state "$|m_{\theta*}\rangle_L$" indicates that the state is represented by a redundant logical qubit. Hereinafter, similarly, the subscript L is added to the state of the logical qubit.

If an error is detected in the error correction area 7 other than the post-selection area 6 in the area where the plurality of physical qubits 3 exist, the processing unit 12 instructs the quantum computer 1 to correct the detected error. The quantum computer 1 executes a gate operation of correcting the detected error in accordance with a command.

The processing unit 12 instructs the quantum computer 1 to execute a gate teleportation circuit using the state of the logical qubit 2 after the error correction. Upon receiving a gate teleportation circuit execution command, the quantum computer 1 executes the gate teleportation circuit using the resource state.

As described above, when no error is detected in the post-selection area 6, the processing unit 12 accepts, as the resource state, the state that is output from the quantum computer 1 after an error in the error correction area 7 is corrected. If no error is detected in the error correction area 7, the error correction process is not needed. Next, the processing unit 12 causes the quantum computer 1 to execute the gate teleportation circuit using the accepted resource state.

In this way, a resource state that is used to execute the gate teleportation circuit is efficiently generated. That is, the states of the m first physical qubits 4 included in each of the physical qubit groups 4a and 4b are rotated around the predetermined axis by one rotation gate operation for each of the physical qubit groups 4a and 4b. This reduces the number of rotation gate operations and reduces the possibility of failure to generate a resource state due to an error from a rotation gate operation. That is, the possibility that the state of the logical qubit 2 after the rotation gate operation is accepted as a resource state is increased by the post-selection. As a result, the number of times the generation of a resource state is redone is reduced, and a resource state is efficiently generated.

Further, the area of the plurality of physical qubits 3 in the logical qubit 2 is divided into the post-selection area 6 and the error correction area 7. When an error occurs in the error correction area 7, the error is corrected first, and the state of the logical qubit 2 is accepted next as a resource state. In this way, the possibility that the state of the logical qubit 2 after the rotation gate operation is accepted as a resource state is increased by the post-selection. As a result, the number of times the generation of a resource state is redone is reduced, and a resource state is efficiently generated.

The post-selection area 6 is an area including measurement qubits used for detecting an error of the first physical qubits 4 among a plurality of measurement qubits used for syndrome measurement on the plurality of physical qubits. For example, the post-selection area 6 is an area including first measurement qubits capable of detecting an error of the first physical qubits 4 and second measurement qubits capable of detecting an error generated by a gate operation on the first measurement qubits. In this case, the error correction area 7 is an area including remaining third measurement qubits other than the first measurement qubits and the second measurement qubits, among the plurality of measurement qubits.

By using the post-selection area 6 and the error correction area 7 as described above, it is possible to correctly reduce generation of a resource state including an error by the post-selection and to maximize the error correction area 7. With the large error correction area 7, the possibility that the error that occurs in the logical qubit 2 is corrected by the error correction without redoing the generation of the resource state is increased, and the resource state generation efficiency is improved.

[Second Embodiment]

A second embodiment is a quantum computing system capable of efficiently generating a resource state with a state preparation protocol.

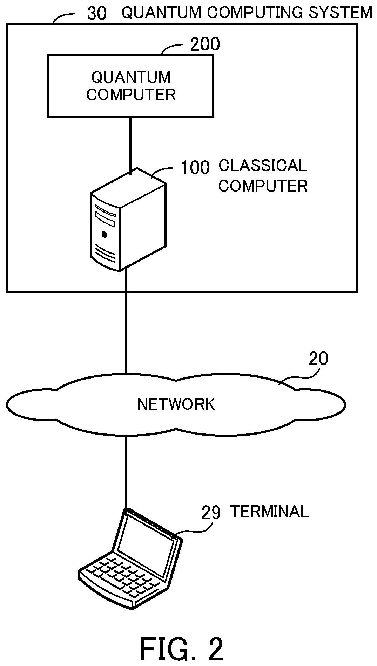

FIG. 2 is a diagram illustrating an example of a system configuration according to a second embodiment. A quantum computing system 30 includes a classical computer 100 and a quantum computer 200. The classical computer 100 is a so-called von Neumann computer. The quantum computer 200 is a non-Neumann computer to which the principle of quantum mechanics is applied. The classical computer 100 is connected to a terminal 29 via a network 20. The terminal 29 is a von Neumann computer used by a user.

The user uses the terminal 29 to create a quantum circuit for solving a problem to be solved by quantum computation. The created quantum circuit is transmitted from the terminal 29 to the quantum computing system 30. In the quantum computing system 30, the classical computer 100 and the quantum computer 200 coordinate with each other to execute quantum computation in accordance with the acquired quantum circuit. Then, the quantum computing system 30 transmits the computation result to the terminal 29.

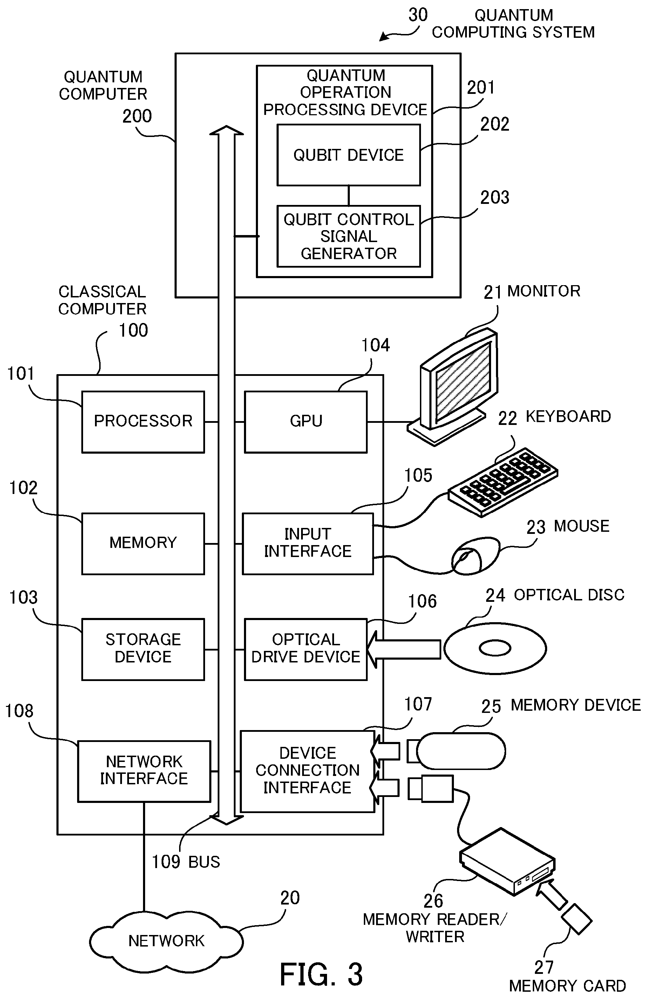

FIG. 3 is a diagram illustrating an example of hardware of the quantum computing system. The entire classical computer 100 is controlled by a processor 101. A memory 102 and a plurality of peripheral devices are connected to the processor 101 via a bus 109.

The classical computer 100 may be a multiprocessor system having a plurality of processors. A set of processors in the multiprocessor system may be referred to as a processor 101. The processor 101 may be referred to as processor circuitry. Each of the plurality of processors is able to execute some or all of the plurality of processes executed by the classical computer 100. When there are a plurality of related processes, two or more processes among the plurality of processes may be executed by different processors.

The processor 101 is, for example, a central processing unit (CPU), a micro processing unit (MPU), or a digital signal processor (DSP). At least a part of the functions implemented by the processor 101 executing a program may be implemented by an electronic circuit such as an application specific integrated circuit (ASIC) or a programmable logic device (PLD).

The memory 102 is used as a main storage device of the classical computer 100. The memory 102 temporarily stores at least part of operating system (OS) programs and application programs to be executed by the processor 101. The memory 102 also stores various data used for processing by the processor 101. As the memory 102, for example, a volatile semiconductor storage device such as a random access memory (RAM) is used.

Examples of the peripheral devices connected to the bus 109 include a storage device 103, a graphics processing unit (GPU) 104, an input interface 105, an optical drive device 106, a device connection interface 107, and a network interface 108.

The storage device 103 electrically or magnetically writes and reads data to and from a built-in recording medium. The storage device 103 is used as an auxiliary storage device of the classical computer 100. The storage device 103 stores OS programs, application programs, and various data. As the storage device 103, for example, a hard disk drive (HDD) or a solid state drive (SSD) may be used.

The GPU 104 is an arithmetic device that executes image processing, and is an example of a graphic controller. A monitor 21 is connected to the GPU 104. The GPU 104 displays an image on the screen of the monitor 21 in accordance with a command from the processor 101. Examples of the monitor 21 include a display device using organic electro luminescence (EL) and a liquid crystal display device.

A keyboard 22 and a mouse 23 are connected to the input interface 105. The input interface 105 transmits signals sent from the keyboard 22 and the mouse 23 to the processor 101. The mouse 23 is an example of a pointing device, and other pointing devices may be used alternatively. Examples of the other pointing devices include a touch panel, a tablet, a touch pad, and a track ball.

The optical drive device 106 reads data recorded on an optical disc 24 or writes data to the optical disc 24 using laser light or the like. The optical disc 24 is a portable recording medium on which data is recorded so as to be readable by reflection of light. The optical disc 24 may be a digital versatile disc (DVD), a DVD-RAM, a compact disc read-only memory (CD-ROM), a CD-Recordable (CD-R), CD-rewritable (CD-RW), or the like.

The device connection interface 107 is a communication interface for connecting peripheral devices to the classical computer 100. For example, a memory device 25 and a memory reader/writer 26 may be connected to the device connection interface 107. The memory device 25 is a recording medium having a function of communicating with the device connection interface 107. The memory reader/writer 26 is a device that writes data to a memory card 27 or reads data from the memory card 27. The memory card 27 is a card-type recording medium.

The network interface 108 is connected to the network 20. The network interface 108 transmits and receives data to and from other computers or communication devices via the network 20. The network interface 108 is a wired communication interface connected to a wired communication device such as a switch or a router via a cable. Further, the network interface 108 may be a wireless communication interface that is connected to and communicates with a wireless communication device such as a base station or an access point by radio waves.

The quantum computer 200 shares the bus 109 with the classical computer 100. The quantum computer 200 is able to execute information communication with each element in the classical computer 100 via the bus 109.

The quantum computer 200 includes a quantum operation processing device 201 connected to the bus 109. The quantum operation processing device 201 executes gate operations on qubits based on quantum gates represented by quantum circuits and measures the states of the qubits. The quantum operation processing device 201 includes a qubit device 202 and a qubit control signal generator 203. The qubit device 202 holds the states of a plurality of qubits and executes gate operations on these qubits. The qubit control signal generator 203 generates control signals for instructing gate operations or measurement on the qubits.

The quantum computing system 30 is able to implement the process functions according to the second embodiment by using the hardware as described above. The information processing apparatus 10 according to the first embodiment may also be implemented by hardware similar to that of the classical computer 100 illustrated in FIG. 3.

The classical computer 100 implements the process functions according to the second embodiment by executing a program recorded in a computer-readable recording medium, for example. The program describing the process contents to be executed by the classical computer 100 may be recorded in various recording media. For example, a program to be executed by the classical computer 100 may be stored in the storage device 103. The processor 101 loads at least a part of the programs in the storage device 103 into the memory 102 and executes the program. The program to be executed by the classical computer 100 may be recorded in a portable recording medium such as the optical disc 24, the memory device 25, or the memory card 27. The program stored in the portable recording medium becomes executable after being installed in the storage device 103 under the control of the processor 101, for example. Alternatively, the processor 101 may read the program directly from the portable recording medium and may execute the program.

Next, an outline of error correction in quantum computation and usefulness of the STAR architecture will be described.

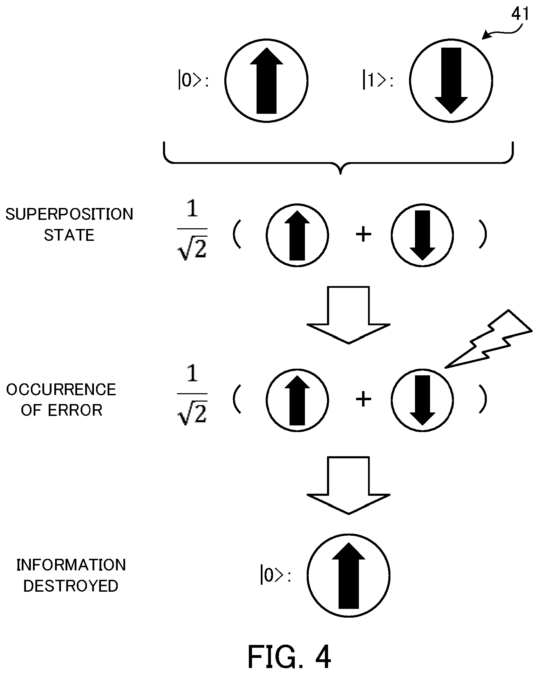

FIG. 4 illustrates characteristics of qubits. A qubit 41, which is the minimum unit of information in the quantum computer 200, is settable in a state 10), a state 11), or a superposition state of $|0\rangle$ and 11). In the superposition state, the probability that the measured value of the qubit 41 indicates $|0\rangle$ or $|1\rangle$ is stochastically determined. For example, when the probability of $|0\rangle$ and the probability of 11) are the same, the superposition state of this qubit 41 is expressed as "$2^{-1/2}(|0\rangle + |1\rangle)$".

The information about the qubit 41 could be destroyed by an interaction with an environment, an error in an operation, or the like (an error could occur). For example, if the superposition state is destroyed by an error, the state of the qubit 41 could change to the state $|0\rangle$. To improve the computation accuracy, a qubit in which an error has occurred needs to be detected, and the state of this qubit needs to be corrected to its correct state.

Thus, a technique referred to as quantum error correction has been proposed. In quantum error correction, encoding is executed by combining a plurality of qubits. When encoding is executed, the state of one or a plurality of logical qubits is expressed by a plurality of physical qubits used in the encoding. Based on the overall state of the plurality of coded qubits, the qubit in which the error has occurred is detected and corrected.

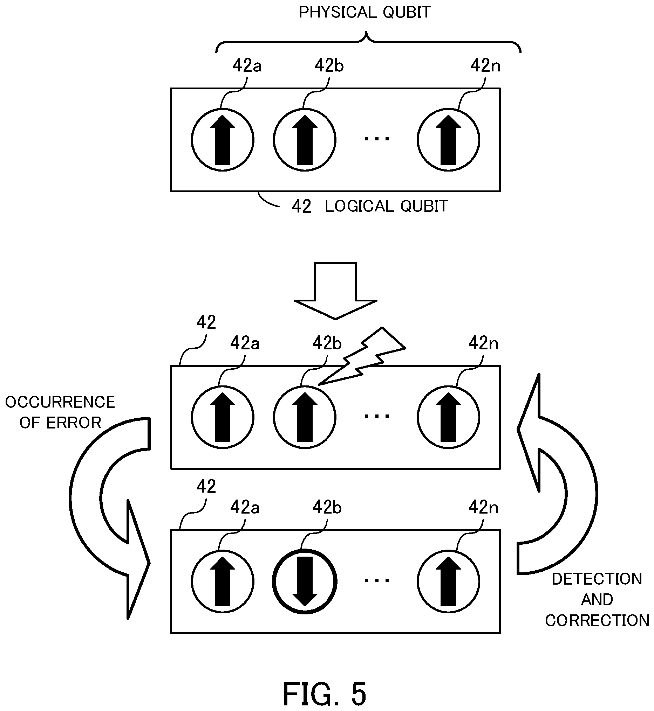

FIG. 5 illustrates an example of the quantum error correction. As illustrated in FIG. 5, a logical qubit 42 is defined by a plurality of physical qubits 42a, 42b, ..., and 42n. In the example in FIG. 5, the state of each of the plurality of physical qubits 42a, 42b, ..., 42n represents 10). Next, an error occurs, e.g., the state of the physical qubit 42b is inverted to $|1\rangle$. In this case, the error is detected based on information obtained from the state of each of the plurality of physical qubits 42a, 42b, ..., and 42n. Next, the physical qubit 42b in which the error has occurred is determined, and the state of the physical qubit 42b is corrected.

By executing the quantum error correction in this way as needed, even if an error occurs in a physical qubit, as long as the number of errors is in an allowable range, the logical qubit 42 is maintained in its correct state. It is possible to implement the quantum computation associated with the quantum error correction on logical qubits by combining predetermined basic gates.

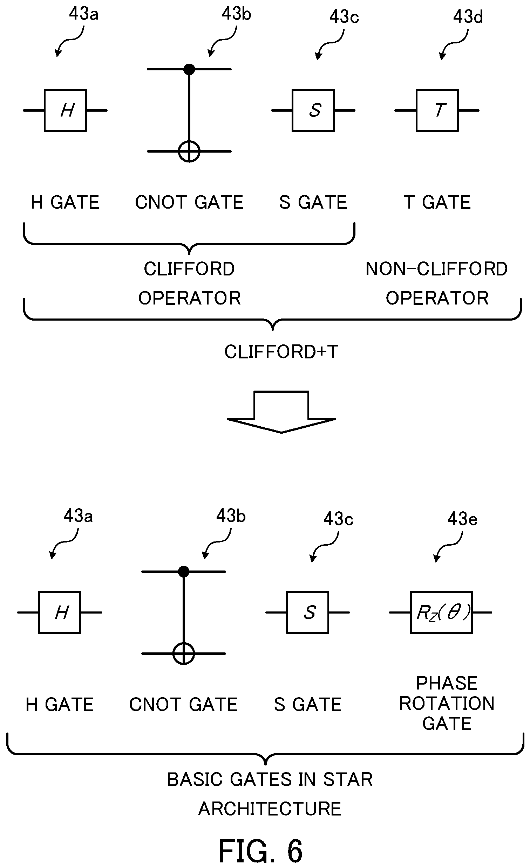

FIG. 6 is a diagram illustrating an example of basic gates used for fault-tolerant quantum computation. For example, the basic gates used for quantum computation associated with the quantum error correction are an H gate 43a, a CNOT gate 43b, an S gate 43c, and a T gate 43d. The H gate 43a is called a Hadamard gate and is a quantum gate that rotates a state by 180 degrees around an axis that is tilted at an angle of 45 degrees between the Z axis and the X axis. The CNOT gate 43b is a quantum gate that maintains the state of the target qubit if the state of the control qubit represents $|0\rangle$ and inverts the state of the target qubit ($|0\rangle$ to $|1\rangle$ or $|1\rangle$ to 10)) if the state of the control qubit represents 11). The S gate 43c is a quantum gate that rotates the state by $\pi/2$ around the Z axis. The T gate 43d is a quantum gate that rotates the state by $\pi/4$ around the Z axis.

Among these quantum gates, the H gate 43a, the CNOT gate 43b, and the S gate 43c are called "Clifford operators". In contrast, the T gate is called "non-Clifford operator". The basic gates in FIG. 6 are collectively called "Clifford + T". "Clifford + T" used in the computation by the quantum computer 200 corresponds to AND, XOR, and NOT used in the classical computer 100. That is, it is possible to execute various kinds of quantum computations by combining the quantum gates of "Clifford + T".

Here, in error-tolerant quantum computation based on Clifford + T, one million or more physical qubits are used to execute useful computation. A large percentage (e.g., 90% or more) of a large number of physical qubits is used to rotate logical qubits by an arbitrary angle. A gate operation by a large number based on T gates 43d is executed for rotation by an arbitrary angle. A large number of physical qubits are used for error correction of the T gates 43d (error correction cost is large). This is a major factor in increasing the number of physical qubits for implementing FTQC.

Moreover, in order to implement a rotation operation by an arbitrary angle, in most cases, the gate operation of the T gate 43d is repeated about several tens of times. Therefore, the implementation of a rotation by an arbitrary angle by the T gate 43d decreases the quantum circuit execution efficiency.

Therefore, in the STAR architecture, a phase rotation gate 43e is used as a basic gate, instead of the T gate 43d of the Clifford + T. The phase rotation gate 43e in the STAR architecture may be implemented using a gate teleportation circuit using a predetermined resource state "$|m_{\theta*}\rangle_L$". $\theta*$ is an arbitrary rotation angle. The state "$|m_{\theta*}\rangle$" is "$|m_{\theta*}\rangle = R_Z(\theta_*)|+\rangle = 2^{-1/2}(e^{-i\theta*/2}|0\rangle + e^{+i\theta*/2}|1\rangle)$". "$R_Z(\theta_*)$" is "$R_Z(\theta_*) = e^{i\theta*Z}$" (Z is a Pauli-Z operator).

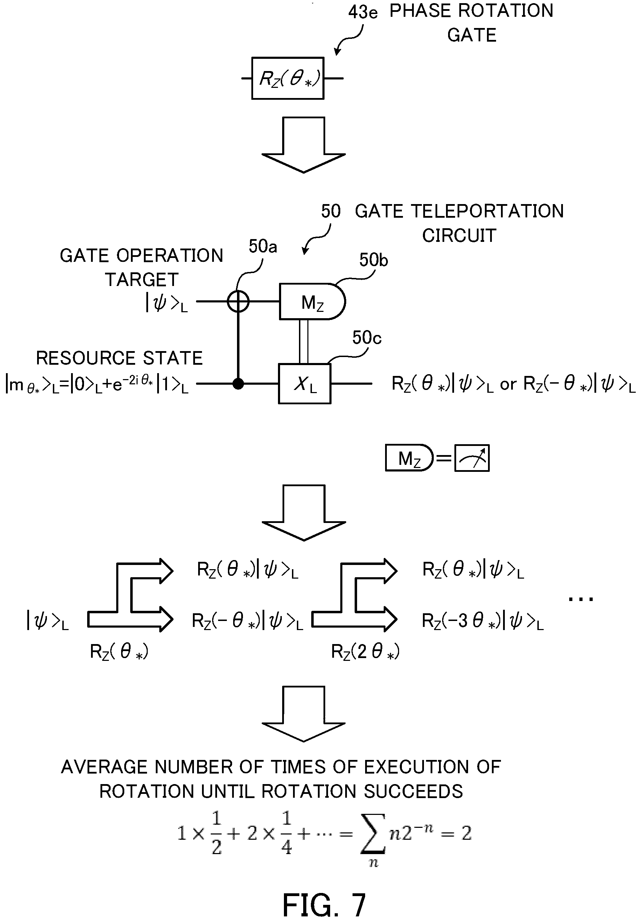

FIG. 7 is a diagram illustrating an example of a quantum circuit that executes a gate operation of an arbitrary rotation. A gate teleportation circuit 50 is a quantum circuit that implements the rotation ($R_Z(\theta_*)$) of the logical rotation angle $\theta_*$. In the gate teleportation circuit 50, an operation target state "$|\psi\rangle_L$" is input to a first qubit, and the resource state "$|m_{\theta_*}\rangle_L$" is input to a second qubit.

In the gate teleportation circuit 50, first, the gate operation of a CNOT gate 50a is executed with the second qubit as the control qubit and the first qubit as the target qubit. Then, measurement 50b of the first qubit is executed, and if the measurement result is "+1", the gate operation of an X gate 50c is executed on the second qubit.

When the measurement result of the first qubit is "+1", the state of the second qubit is "$R_Z(\theta_*)|\psi\rangle_L$". When the measurement result of the first qubit is "0", the state of the second qubit is "$R_Z(-\theta_*)|\psi\rangle_L$". Thus, after the gate operation of the arbitrary rotation by the gate teleportation circuit 50, "$R_Z(\theta_*)|\psi\rangle_L$" or "$R_Z(-\theta_*)|\psi\rangle_L$" is obtained. That is, the output state stochastically represents the reverse rotation. The probability that the output state represents "$R_Z(\theta_*)|\psi\rangle_L$" and the probability that the output state represents "$R_Z(-\theta_*)|\psi\rangle_L$" are each "1/2".

Since the output state of the gate teleportation circuit 50 stochastically represents the target rotation (forward rotation) or the reverse rotation, the quantum computing system 30 repeatedly executes this gate operation until the target rotation is achieved.

For example, if the gate operation of the rotation by the target logical rotation angle $\theta_*$ fails and the output state represents the reverse rotation ($-\theta_*$), the quantum computing system 30 executes the rotation by the angle $2\theta_*$ in the next rotation gate operation. If the next rotation gate operation by the angle $2\theta_*$ also fails and the output state represents the reverse rotation ($-2\theta_*$), the total of the two rotation operations becomes $-3\theta_*$. In this case, the quantum computing system 30 executes, for example, the rotation by an angle $4\theta_*$ in the next rotation gate operation.

If the probability that the rotation succeeds and the probability that the rotation fails are 1/2, the average number of times of the execution of the rotation until the rotation succeeds is expressed by "$1 \times (1/2) + 2 \times (1/4) + ... = \Sigma_n n2^{-n} = 2$". That is, the quantum computing system 30 is able to implement an arbitrary rotation by executing the gate operation of the gate teleportation circuit 50 twice on average.

The resource state "$|m_{\theta_*}\rangle_L$" is used as an input to the gate teleportation circuit 50. Thus, the resource state generation process is executed before the execution of the gate teleportation. The accuracy of the generated resource state affects the accuracy of the entire arbitrary rotation.

As a method of the state preparation protocol for generating a resource state, there is a method disclosed in the above-mentioned documents (Akahoshi et al. and Choi et al.). For example, the method disclosed in Choi et al. has been found to provide high performance for rotation gates with small rotation angles.

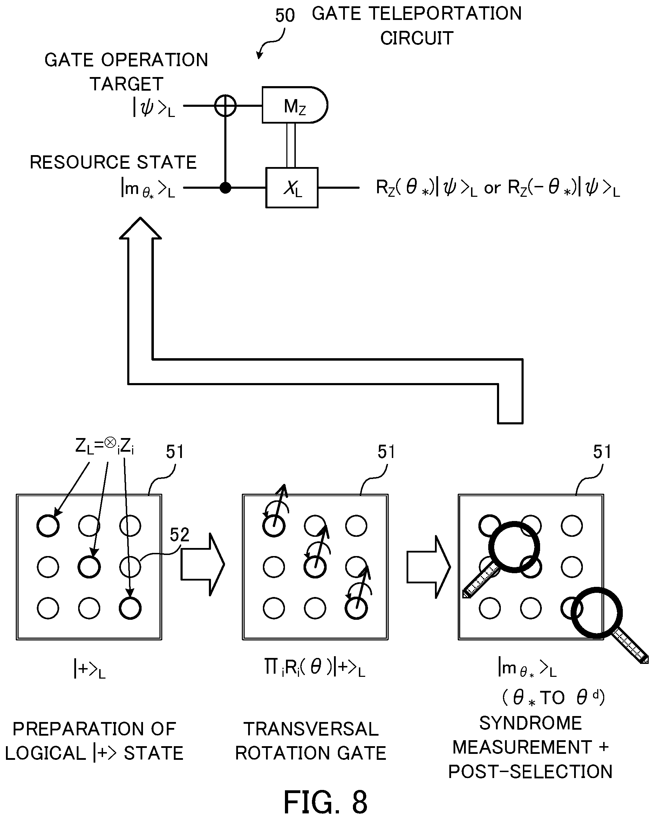

FIG. 8 is a diagram illustrating an example of the state preparation protocol. A logical qubit 51 includes a plurality of physical qubits 52. In the example of FIG. 8, the logical qubit 51 is made redundant by a surface code of a code distance "3".

The quantum computing system 30 prepares a logical $|+\rangle$ state "$|+\rangle_L$" with the logical qubit 51. For example, the quantum computing system 30 applies a logical Z operator "$Z_L = \otimes_i Z_i$" to three of the plurality of physical qubits 52 (i is the qubit number of a physical qubit to be subjected to a gate operation).

The quantum computing system 30 executes the gate operation of a transversal rotation gate on the logical qubit 51. The transversal rotation gate is a quantum gate that simultaneously applies Z rotation of a physical rotation angle $\theta$ to a string of physical qubits arranged in a lateral direction among the physical qubits constituting the logical Z operator. The transversal rotation gate applied to the logical $|+\rangle$ state is expressed as "$\Pi_i R_i(\theta)|+\rangle_L$".

The state of the logical qubit 51 is represented by "$|m_{\theta_*}\rangle_L$". The logical rotation angle $\theta_*$ depends on the physical rotation angle $\theta$ in the transversal rotation gate, and is "$\theta_*$ to $\theta^d$" (d is the code distance). The quantum computing system 30 determines the physical rotation angle $\theta$ such that the value of $\theta_*$ becomes a target angle in the rotation gate operation to be applied to the logical qubit in the state $|\psi\rangle_L$. The quantum computing system 30 is able to generate an appropriate resource state by executing the rotation gate operation by the physical rotation angle based on the transversal rotation gate.

The quantum computing system 30 executes the syndrome measurement on the logical qubit 51 after the gate operation of the transversal rotation gate. The syndrome measurement is a special quantum measurement operation executed to detect an error in an error correction code state. The syndrome measurement is executed using ancilla qubits (not illustrated). The syndrome measurement is executed based on a quantum circuit that extracts only the error information such that the quantum state encoded in the error correction code is not destroyed. The result of the syndrome measurement is given as a binary value of $\pm 1$. When any error occurs, the value of the syndrome measurement result associated with the error is inverted.

The quantum computing system 30 executes post-selection on the state of the logical qubit 51 having no error as a resource state. The post-selection is a process of extracting only trials from which a measurement result satisfying a certain condition is obtained after the syndrome measurement is executed, and rejecting the other trials. By executing the post-selection, it is possible to obtain only the quantum states having good properties suitable for the purpose.

Note that there are a plurality of combination patterns of the physical qubits to be subjected to the gate operation when the logical $|+\rangle$ state is prepared. Similarly, there are also a plurality of combination patterns of the physical qubits to be subjected to the gate operation of the transversal rotation gate.

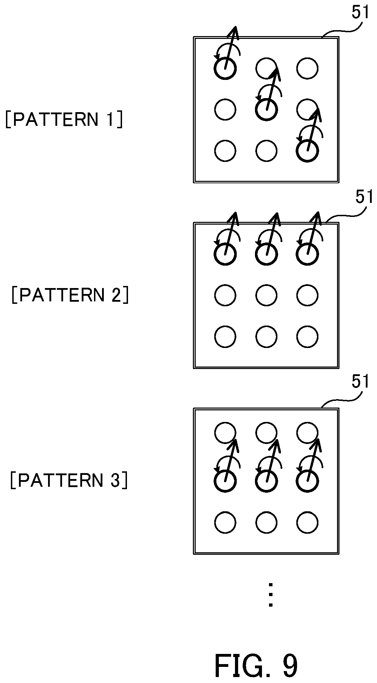

FIG. 9 is a diagram illustrating an example of combination patterns of physical qubits to be subjected to the gate operation of a transversal rotation gate. In pattern 1, as illustrated in FIG. 8, three physical qubits arranged in a diagonal direction are the gate operation targets of the transversal rotation gate. In pattern 2, three physical qubits arranged in the horizontal direction in the first row are the gate operation targets of the transversal rotation gate. In pattern 3, three physical qubits arranged in the horizontal direction in the second row are the gate operation targets of the transversal rotation gate.

In the state preparation protocol, an error could occur in the preparation of the logical $|+\rangle$ state or in the gate operation of the transversal rotation gate. An error could also occur in the syndrome measurement executed for error detection. If an error occurs in the process of generating a resource state, the resource state generation process is restarted. When the resource state generation process is restarted, the process is redone from the process of preparing the logical $|+\rangle$ state.

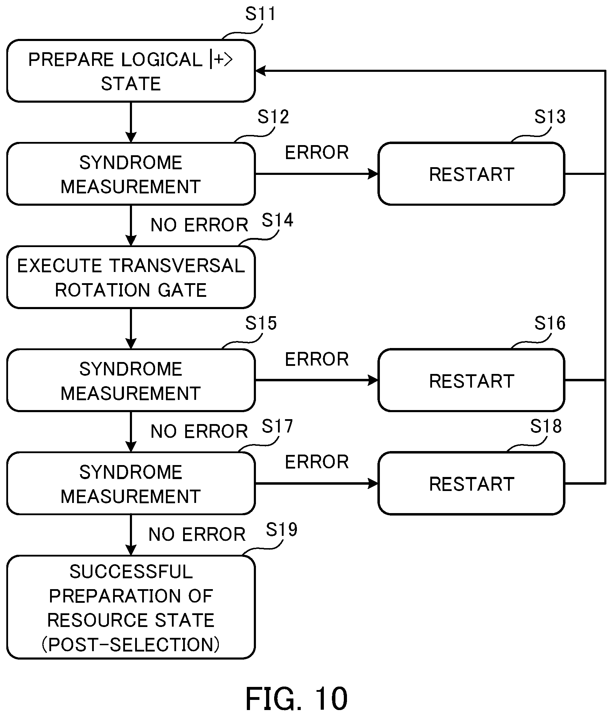

FIG. 10 is a diagram illustrating an example of a process executed when an error occurs using the state preparation protocol. The quantum computing system 30 first executes a preparation process of a logical $|+\rangle$ state for the logical qubit 51 used for generation of a resource state (step S11). Next, the quantum computing system 30 executes the syndrome measurement on the logical qubit 51 (step S12). Upon detecting an error in the syndrome measurement, the quantum computing system 30 restarts the resource state preparation process (step S13).

If no error is detected in the syndrome measurement after the preparation process of the logical $|+\rangle$ state, the quantum computing system 30 executes the gate operation of a transversal rotation gate on the logical qubit 51 (step S14). Next, the quantum computing system 30 executes the syndrome measurement on the logical qubit 51 (step S15). Upon detecting an error in the syndrome measurement, the quantum computing system 30 restarts the resource state preparation process (step S16).

If no error is detected in the first syndrome measurement after the gate operation of the transversal rotation gate, the quantum computing system 30 executes the syndrome measurement on the logical qubit 51 again (step S17). This is based on the assumption that an error has occurred in the first syndrome measurement and the error could not be correctly detected. Upon detecting an error in the second syndrome measurement, the quantum computing system 30 restarts the resource state preparation process (step S18).

When no error is detected in the second syndrome measurement, the quantum computing system 30 determines that the preparation of the resource state is successful, and post-selects the state of the logical qubit 51 as a resource state (step S19).

Next, the reason why an error is detected in the syndrome measurement after the gate operation of the transversal rotation gate will be described.

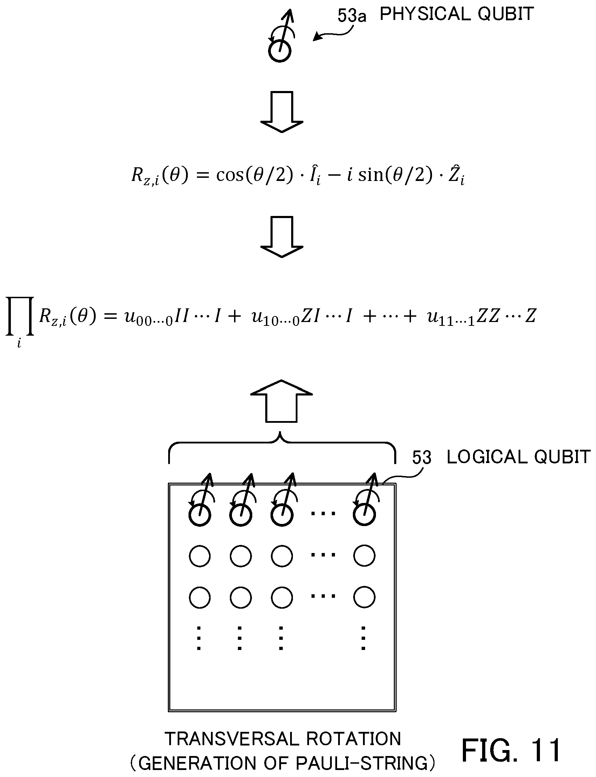

FIG. 11 is a diagram illustrating an example of the gate operation of a transversal rotation gate. When the transversal rotation gate is applied to a logical qubit 53, for example, a rotation gate operation of phase rotation is executed on a plurality of physical qubits in the first row. Focusing on an i-th physical qubit 53a as an operation target, the gate operation of the phase rotation applied to the physical qubit 53a is expressed by the following equation (1).

$$R_{z,i}(\theta) = \cos(\theta/2) \cdot \hat{I}_i - i \sin(\theta/2) \cdot \hat{Z}_i \qquad (1)$$

By executing the same gate operation on all the physical qubits as the operation targets, the transversal rotation gate is represented by Equation (2).

$$\prod_i R_{z,i}(\theta) = u_{00\cdots0} II \cdots I + u_{10\cdots0} ZI \cdots I + \cdots + u_{11\cdots1} ZZ \cdots Z \qquad (2)$$

Equation (2) indicates that various Pauli string operations such as "II⋯I, ZI⋯I, ZZ⋯I, ⋯, ZZ⋯Z" are applied as quantum superposition by the gate operation of the transversal rotation. The coefficients "$u_{00\cdots0}, u_{10\cdots0}, \cdots, u_{11\cdots1}$" of the respective terms are real numbers obtained based on the value of 8, and are defined as follows.

$$u_x = \cos^{d-|x|}(\theta/2) \cdot (-i)^{|x|} \sin^{|x|}(\theta/2)$$

Here, x is an arbitrary d-digit bit string, and |x| represents the total number of 1s included in the bit string x.

As described above, the transversal rotation is a process of generating and superimposing Pauli strings of a plurality of patterns. When the syndrome measurement on the logical qubit 53 after the transversal rotation is executed, the applied Pauli string operation is measured.

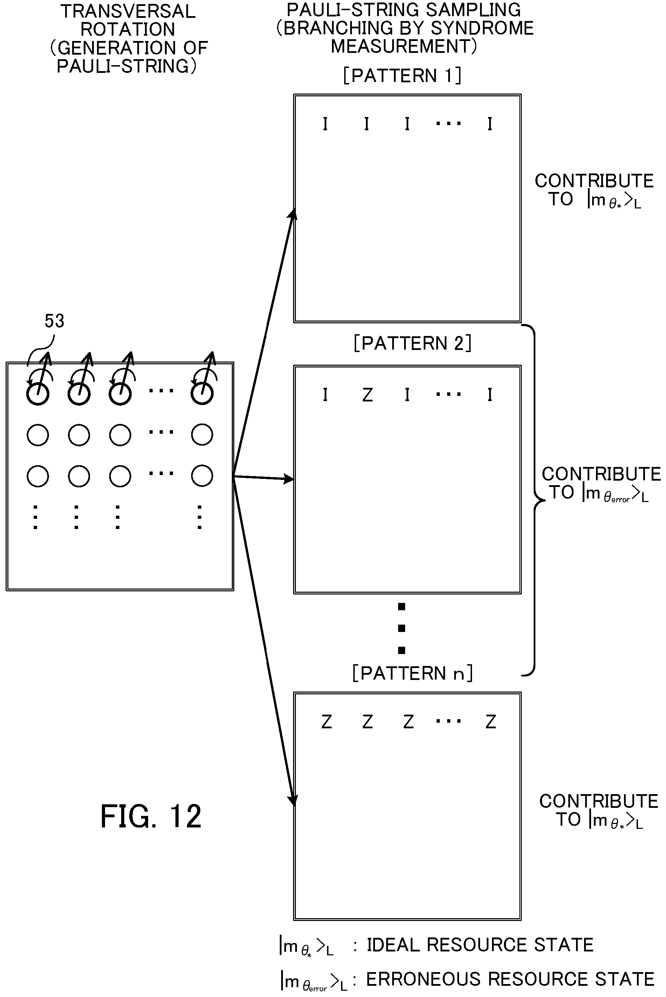

FIG. 12 is a diagram illustrating an example of the syndrome measurement after the transversal rotation. After the gate operation of the transversal rotation gate on the logical qubit 53 for resource state generation, if the syndrome measurement is executed, branching occurs, and one of a plurality of patterns of the Pauli string operation applied is obtained. In this case, a Pauli string operation in which all are I (III⋯I) or a Pauli string operation in which all are Z (ZZZ⋯Z) contributes to an ideal resource state $|m_{\theta*}\rangle_L$ of the logical qubit 53. "Pattern 1" and "pattern n" (n is a natural number indicating the pattern number) of the Pauli string operation illustrated in FIG. 12 are the ideal resource states.

On the other hand, a Pauli string operation in which I and Z are mixed contributes to an erroneous resource state $|m_{\theta error}\rangle$ ("error" following θ is a subscript of θ, and the same applies hereinafter). "Pattern 2" to "pattern n-1" of the Pauli string operation illustrated in FIG. 12 are erroneous resource states.

The syndrome measurement is a process of measuring eigenvalues of stabilizers using ancilla qubits. For example, ancilla qubits used in the syndrome measurement are connected to two adjacent physical qubits serving as operation targets of a transversal rotation operation. From the measurement results of the eigenvalues of the stabilizers obtained from the plurality of ancilla qubits, it is possible to detect whether I and Z are mixed in the Pauli string operation.

When the syndrome measurement is executed, only a state obtained as a result of the application of one type of Pauli string operation is extracted. Which pattern of Pauli string operation is extracted is stochastically determined. When the ideal resource state $|m_{\theta*}\rangle_L$ is detected, the state of the logical qubit 53 is post-selected.

If the erroneous resource state $|m_{\theta error}\rangle_L$ is detected, the resource state is rejected and the resource state generation process is redone. In order to improve the efficiency of the process, it is important to increase the probability that only the ideal resource state $|m_{\theta*}\rangle_L$ is correctly extracted by the syndrome measurement.

When an error occurs in the gate operation of the transversal rotation gate, in spite of the erroneous resource state $|m_{\theta error}\rangle_L$, there are cases in which an ideal resource state $|m_{\theta*}\rangle_L$ is extracted in the syndrome measurement.

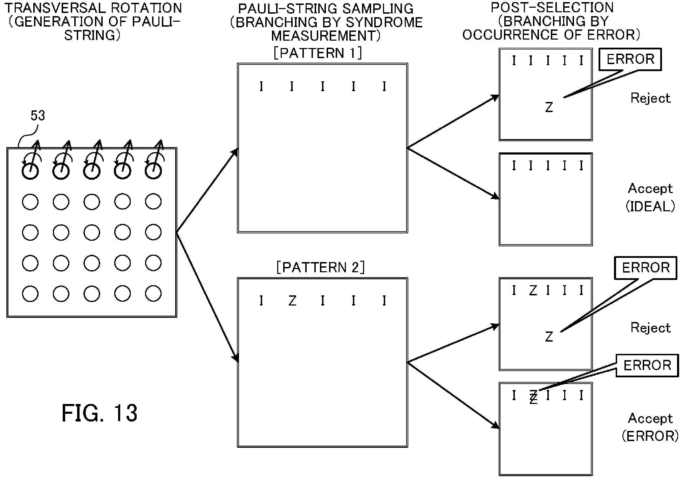

FIG. 13 is a diagram illustrating an example of a post-selection situation when an error occurs. Here, in order to simplify the description, the order relationship between the stochastic branching by the syndrome measurement and the stochastic branching by the error occurrence has been exchanged (since these stochastic events are independent from each other, such order exchange is justified). For example, when the Pauli string operation is "pattern 1", it is assumed that a Z error has occurred in a physical qubit which is not an operation target of the transversal rotation gate. This Z error is detected by the syndrome measurement. In this case, the state of the logical qubit 53 is rejected (Reject). If no error has occurred in "pattern 1", the state of the logical qubit 53 is accepted as an ideal resource state (Accept).

Next, it is assumed that a Z error has occurred in a physical qubit when the Pauli string operation is "pattern 2". In a case where the occurrence position of the Z error is a physical qubit that is not an operation target of the transversal rotation gate, the Z error is detected by the syndrome measurement, and the state of the logical qubit 53 is rejected (Reject).

On the other hand, there may be a case where the occurrence position of the Z error is a physical qubit which is an operation target of the transversal rotation gate and which is caused by an undesirable Pauli string operation. In this case, the operation of Z caused by the Pauli string operation and the operation of Z caused by the error cancel each other out. Therefore, it is not possible to distinguish this state from the state of "IIIII". As a result, although an error has occurred, the state of the logical qubit 53 is accepted as a resource state. That is, when a Z error occurs in a physical qubit which is an operation target of the transversal rotation gate and which is caused by an undesirable Pauli string operation, the error is not correctly detected and becomes an error factor of the quantum computation based on a gate teleportation circuit using a resource state.

As described above, in the resource state generation using the transversal rotation gate, various types of errors cause errors in the output state of the target quantum computation. The error rate (probability of rejection) of the prepared resource state is proportional to the code distance d of the logical qubit 53. Furthermore, the failure probability of the resource state generation by the state preparation protocol (probability that an erroneous resource state is post-selected) is proportional to the square $d^2$ of the code distance d.

In order to use a phase rotation gate instead of the T gate of Clifford + T, it is important to reduce as much as possible the types of errors in the resource state generation process, which cause errors in the output state. At the same time, it is important to achieve high performance even in an area where the code distance is large.

In the quantum computing system 30 according to the second embodiment, the following two points are mainly improved.

1. In the quantum computing system 30, the transversal rotation gate is not implemented by a Z rotation gate (one qubit gate) for each physical qubit, but is implemented by a multi-Z rotation gate. As a result, a reduction in the error rate and an increase in the success probability are achieved.
2. In the quantum computing system 30, a hybrid method of post-selection and error correction is adopted instead of simple post-selection for generating a resource state. This improves the success probability.

These improvements allow the resource state preparation to be fully exploited even in areas with large code distances.

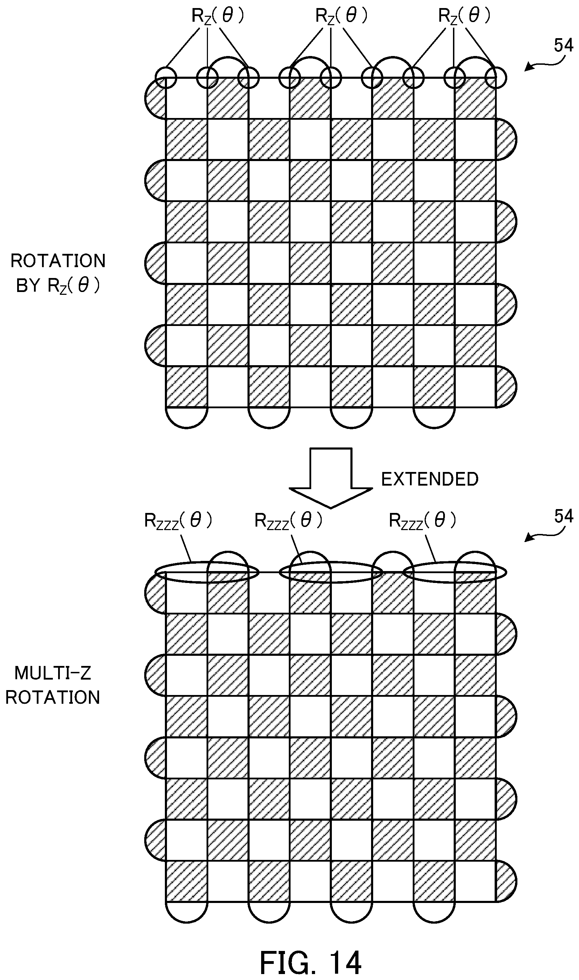

FIG. 14 is a diagram illustrating an example of a transversal rotation gate that collectively rotates two or more physical qubits. In a logical qubit 54 illustrated in FIG. 14, the gate operation of a transversal rotation gate is executed on nine physical qubits on the upper side among a plurality of physical qubits constituting a surface code. In this case, when a rotation gate operation is individually executed, the rotation gate operation of $R_Z(\theta)$ is executed on each of the nine physical qubits related to the logical Z operator.

On the other hand, in the quantum computing system 30, the transversal rotation gate is extended to execute m-weight multi-Z rotation such that the qubits related to the logical Z operator are occupied. 3-weight multi-Z rotation is expressed by Equation (3).

$$R_{ZZZ}(\theta) = e^{-\frac{i\theta}{2}\hat{Z}\hat{Z}\hat{Z}} \qquad (3)$$

The multi-Z rotation is generalized and expressed by Equation (4).

$$R_{ZZ\cdots Z}(\theta) = e^{-\frac{i\theta}{2}\hat{Z}\hat{Z}\cdots\hat{Z}} \qquad (4)$$

For example, the quantum computing system 30 divides the nine physical qubits into groups of three physical qubits and rotates the state of each of the groups of three physical qubits by $R_{ZZZ}(\theta)$. By implementing the transversal rotation gate based on the multi-Z rotation, it becomes possible to increase the resistance to a 1-qubit error and to reduce the error rate even in the case of a logical qubit having a large code distance.

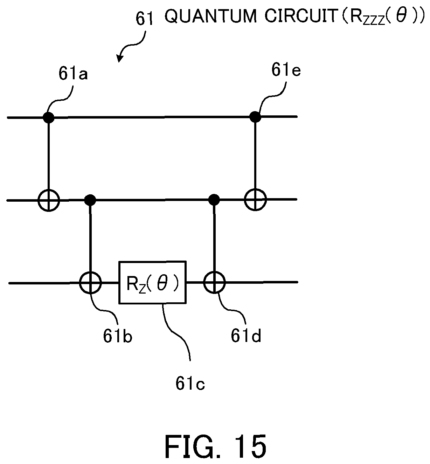

FIG. 15 is a diagram illustrating an example of a quantum circuit for implementing a multi-Z rotation gate. A quantum circuit 61 illustrated in FIG. 15 is a quantum circuit for implementing $R_{ZZZ}(\theta)$ that executes a phase rotation operation on three qubits.

In the quantum circuit 61, first, a CNOT gate 61a that uses the first physical qubit as a control qubit and the second physical qubit as a target qubit is disposed. Next to the CNOT gate 61a, a CNOT gate 61b which uses the second physical qubit as a control qubit and the third physical qubit as a target qubit is disposed. Next, a phase rotation gate 61c is disposed for the third physical qubit.

Next to the phase rotation gate 61c, a CNOT gate 61d which uses the second physical qubit as a control qubit and the third physical qubit as a target qubit is disposed. Finally, a CNOT gate 61e which uses the first physical qubit as a control qubit and the second physical qubit as a target qubit is disposed.

The rotation of $R_{ZZZ}(\theta)$ is implemented by causing the quantum computer 200 to execute a gate operation in accordance with the quantum circuit 61. In this way, the multi-Z rotation gate is converted into the quantum circuit 61 in which the single phase rotation gate 61c and the plurality of CNOT gates 61a, 61b, 61d, and 61e are combined at the implementation stage. In the quantum circuit 61, the gate operation of the phase rotation is executed only once.

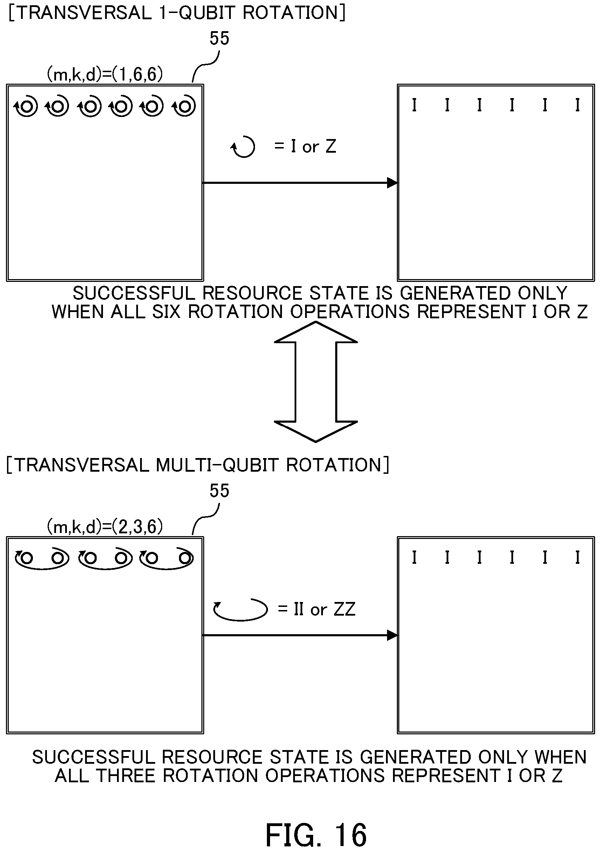

FIG. 16 is a diagram illustrating an example of a transversal rotation gate implemented by $R_{ZZ}(\theta)$. A specific implementation method of the transversal rotation gate may be represented by the following three types of parameters.

m: Z-weight number of rotation gate (the number of physical qubits rotated simultaneously)
k: total number of rotation gates
d: code distance

"d = m × k" is satisfied. Regarding the surface code, d is equal to the length of a side of the square representing the area of the surface code (equal to the number of data qubits on one side).

For example, when the gate operation of a transversal rotation gate is executed on a logical qubit 55 encoded with "d = 6" by a 1-qubit rotation gate, the transversal rotation gate is expressed as "(m, k, d) = (1, 6, 6)". In the gate operation of the 1-qubit rotation gate, I or Z stochastically acts on one physical qubit as the operation target.

When the gate operation of a transversal rotation gate is executed on the logical qubit 55 by a 2-qubit rotation gate, the transversal rotation gate is expressed as "(m, k, d) = (2, 3, 6)". In the gate operation of the 2-qubit rotation gate, II or ZZ stochastically acts on two physical qubits as the operation targets.

When the transversal rotation is executed by the 1-qubit rotation gate (1, 6, 6), a resource state is generated successfully only when all the six rotation gate operations on the six physical qubits represent I or Z. That is, only two of the $2^6$ patterns of Pauli string operations are successful.

On the other hand, when the transversal rotation is executed by the 2-qubit rotation gate (2, 3, 6), a resource state is generated successfully only when all the three rotation gate operations on the three pairs of physical qubits represent I or Z. That is, only two of $2^3$ patterns of Pauli string operations are successful. Therefore, the possibility that the transversal rotation gate of "(m, k, d) = (2, 3, 6)" generates a resource state successfully is higher than the possibility that the transversal rotation gate of "(m, k, d) = (1, 6, 6)" generates a resource state successfully.

The probability of successfully generating a resource state is computed as follows:

The operation of the transversal rotation gate is expressed by Equation (2). In the resource state generation process, the transversal rotation gate whose operation is expressed by Equation (2) is executed on a logical qubit in the logical $|+\rangle$ state. The target resource state in this case is as illustrated by Equation (5).

$$|m_{\theta_*}\rangle \propto (u_{00\cdots0}II\cdots I + u_{11\cdots1}ZZ\cdots Z)\,|+\,\rangle \qquad (5)$$

The probability that a state is projected to the target resource state (success probability) is given by Equation (6) in the limit where the influence of errors is ignorable.

$$p_{\text{suc}} = |u_{00\cdots0}|^2 + |u_{11\cdots1}|^2 \qquad (6)$$

Here, $|u_{00\cdots0}|^2$ and $|u_{11\cdots1}|^2$ are given by Equation (7) and Equation (8), respectively, based on the number k of gates applied.

$$|u_{00\cdots0}|^2 = |\cos(\theta/2)|^{2k} \qquad (7)$$

$$|u_{11\cdots1}|^2 = |\sin(\theta/2)|^{2k} \qquad (8)$$

Considering that $|\cos(\theta/2)| \leq 1$ and $|\sin(\theta/2)| \leq 1$, the success probability $p_{\text{suc}}$ is a monotonically decreasing function with respect to k. Therefore, the smaller the total number k of rotation gates is (the larger the Z-weight number m is), the higher the success probability will be.

Due to hardware limitations of the quantum computer 200, the Z-weight number m of the multi-Z rotation gate has an upper limit. For example, when the multi-Z rotation gate is decomposed into an equivalent circuit as illustrated in FIG. 15, the number of quantum gates to be executed increases. As the number of quantum gates to be executed increases, errors accumulate and the computational accuracy decreases. In addition, if the number of quantum gates to be executed is excessively increased, there is a possibility that the quantum computation will not be completed within a coherence time (time for maintaining quantum nature). Therefore, it is appropriate to set the Z-weight number m to a large value within an allowable range in terms of hardware of the quantum computer 200.

In the transversal rotation gate operation, multi-Z rotations of different weights may be mixed.

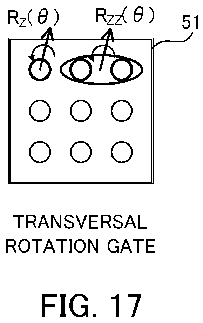

FIG. 17 is a diagram illustrating an example of a transversal rotation gate in which multi-Z rotations of a plurality of weights are mixed. In the example of FIG. 17, in the quantum computing system 30, the rotation gate "$R_Z(\theta)$" is applied to one of the three physical qubits, which are the operation target of the transversal rotation gate. The quantum computing system 30 applies a multi-Z rotation gate "$R_{ZZ}(\theta)$" having a weight of "2" to the remaining two physical qubits.

Next, a hybrid method of post-selection and error correction will be described.

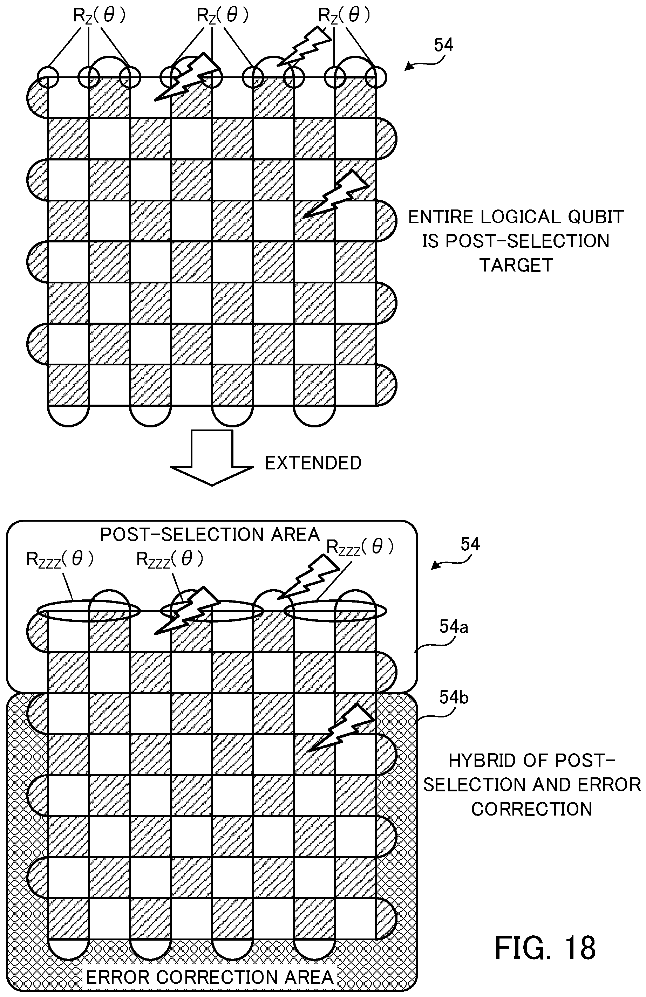

FIG. 18 is a diagram illustrating an example of a hybrid method of post-selection and error correction for rotation surface codes. For example, when an entire logical qubit 54 for resource state generation is the post-selection target, if the syndrome measurement detects an error in any physical qubit in the logical qubit 54, the state of the logical qubit 54 is rejected. In this case, the resource state generation process by the state preparation protocol is executed again.

On the other hand, in the hybrid method, the area of the physical qubits constituting the logical qubit 54 is divided into a post-selection area 54a and an error correction area 54b. The post-selection area 54a is an area used for determination of post-selection. The error correction area 54b is an area in which an error detected by error correction is corrected when the state of the logical qubit 54 is accepted in the post-selection.

In the hybrid method, if an error is detected in the post-selection area 54a by the syndrome measurement, the state of the logical qubit 54 is rejected. In this case, the resource state generation process by the state preparation protocol is executed again. On the other hand, if no error is detected in the post-selection area 54a and an error is detected only in the error correction area 54b, the state of the logical qubit 54 is accepted. If the state of the logical qubit 54 is accepted, the error in the error correction area 54b is corrected by an error correction process.

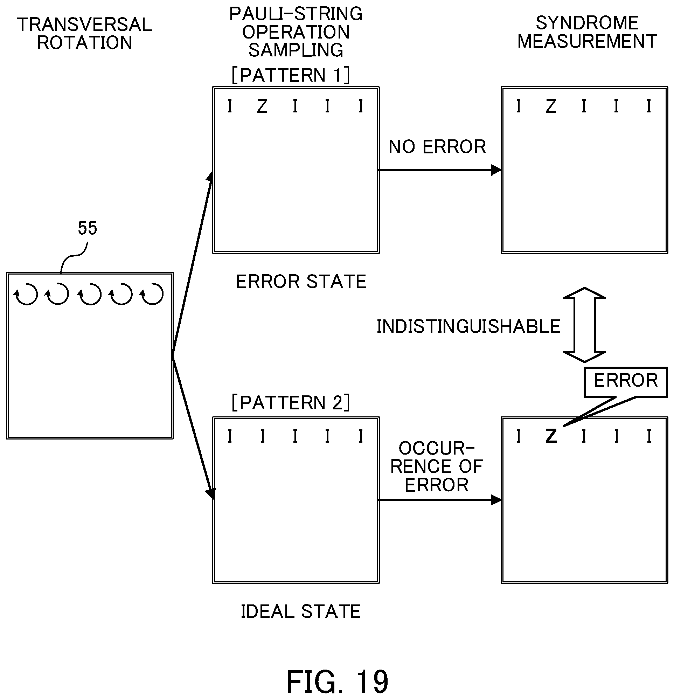

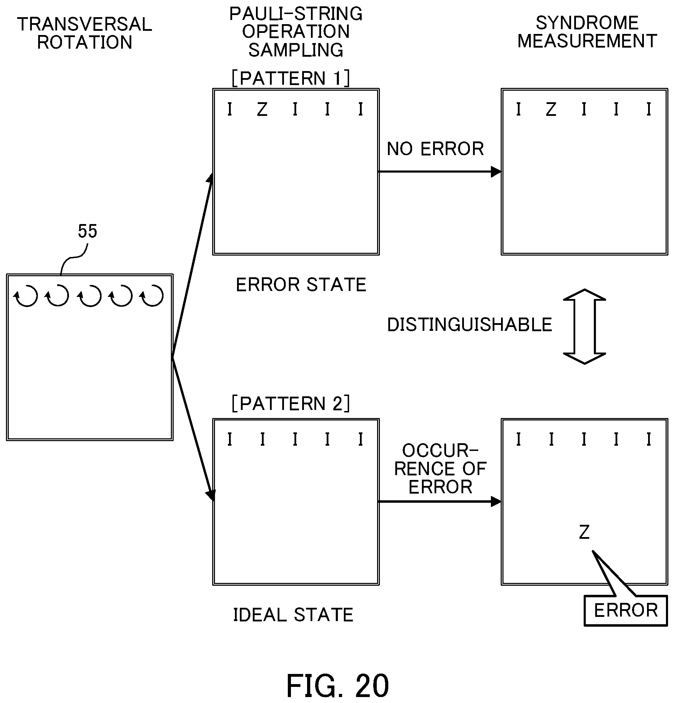

The hybrid method increases the possibility that the state after the gate operation of a transversal rotation gate is accepted as a resource state. As a result, it is possible to generate a resource state efficiently. Hereinafter, the effectiveness of the hybrid method will be specifically described with reference to FIGS. 19 and 20.

FIG. 19 is a diagram illustrating an example of error patterns that are suitable to be dealt with by the post-selection. For example, "pattern 1" in the sampling after a Pauli string operation by the transversal rotation gate corresponds to a Pauli string operation "IZIII". This is an error state. "Pattern 2" corresponds to a Pauli string operation "IIIII". This is an ideal state. Thereafter, when the syndrome measurement is executed by the syndrome measurement quantum circuit, an error could occur in the syndrome measurement.

For example, an error could occur in one of the physical qubits as the operation targets of the transversal rotation gate of "pattern 2" which is an ideal state. In this case, it is not possible to distinguish whether the error state has occurred in the sampling of the Pauli string operation or in the subsequent gate operation.

As described above, when an error occurs around the physical qubits as the operation targets of the transversal rotation gate, it is not possible to exclude the possibility that the error state has occurred in the sampling of the Pauli string operation. Therefore, in either "pattern 1" or "pattern 2", the state of the logical qubit 55 is rejected in the post-selection. That is, the reason why the post-selection is executed is that there is a situation as illustrated in FIG. 19.

FIG. 20 is a diagram illustrating an example of error patterns that allow omission of the post-selection. In the example of FIG. 20, the location of the error in "pattern 2" is away from the physical qubits as the operation targets of the transversal rotation gate. In such a case, the syndrome measurement is able to distinguish whether the error state has occurred in the sampling of the Pauli string operation or in the subsequent gate operation. That is, in the case of "pattern 2", it is possible to determine that the state of the logical qubit 55 is an ideal resource state.

If it is known that the state of the logical qubit 55 is an ideal resource state, the state is accepted as the resource state, thereby reducing the number of times the generation of the resource state is redone. However, if the physical qubits constituting the logical qubit 55 include an error and are left uncorrected, this may cause an error in the subsequent gate teleportation. For such an error detected at a location away from the physical qubits as the operation targets of the transversal rotation gate, it is sufficient to execute error correction so as to cancel the error.

Here, it is not easy to uniformly determine how close the range of the post-selection area 54a needs to be from the physical qubits as the operation targets of the transversal rotation gate. For example, a simulation may be executed with a plurality of patterns while changing the range of the post-selection area 54a. The post-selection area 54a may be determined such that the post-selection area 54a becomes as narrow as possible under the restriction that "the original error rate is not changed".

Next, a problem that occurs when the post-selection area 54a is too narrow will be described.

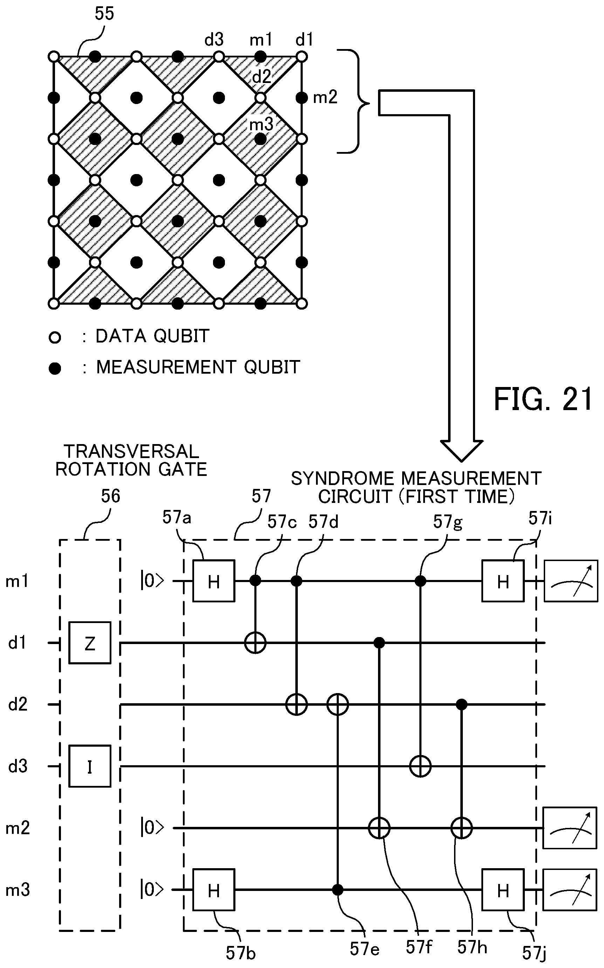

FIG. 21 is a diagram illustrating an example of error state detection in the post-selection area. However, here, for simplicity, a non-rotation surface code is assumed. In FIG. 21, among the physical qubits constituting the logical qubits 55 used for generating a resource state, data qubits representing the state of the logical qubit are indicated by white circles, and measurement qubits used for the syndrome measurement are indicated by black circles. The measurement qubits in the hatched areas correspond to the X stabilizer operators. The measurement qubits in the white areas correspond to the Z stabilizer operators. A row of physical qubits on the upper side of the logical qubit 55 are the gate operation targets of a transversal rotation gate 56.

Here, attention is focused on syndrome measurement for two data qubits d1 and d3 that are gate operation targets of the transversal rotation gate 56 and a data qubit d2 adjacent thereto. The data qubits d1, d2, d3 are connected to a measurement qubit m1. The data qubits d1 and d2 are also connected to a measurement qubit m2. The data qubit d2 is also connected to a measurement qubit m3.

Before execution of a syndrome measurement circuit 57 for executing syndrome measurement on the data qubits d1 and d3, the measurement qubits m1, m2, and m3 are initialized to 10). In the syndrome measurement circuit 57, Hadamard gates 57a and 57b are disposed for the measurement qubits m1 and m3, respectively. However, in order to simplify the drawing, the CNOT gates connected to qubits other than the labeled qubits are omitted in the circuit diagram.

Next, a CNOT gate 57c using the measurement qubit m1 as a control qubit and the data qubit d1 as a target qubit is disposed. Next, a CNOT gate 57d using the measurement qubit m1 as a control qubit and the data qubit d2 as a target qubit is disposed. Next, a CNOT gate 57e using the measurement qubit m3 as a control qubit and the data qubit d2 as a target qubit is disposed. Next, a CNOT gate 57f using the data qubit d1 as a control qubit and the measurement qubit m2 as a target qubit is disposed. Next, a CNOT gate 57g using the measurement qubit m1 as a control qubit and the data qubit d3 as a target qubit is disposed. Next, a CNOT gate 57h using the data qubit d2 as a control qubit and the measurement qubit m2 as a target qubit is disposed.

Finally, in the syndrome measurement circuit 57, Hadamard gates 57i and 57j are disposed for the measurement qubits m1 and m3, respectively. Then, the measurement qubits m1, m2, and m3 are measured.

Here, a situation in which Pauli operators Z and I have been sampled on the data qubits d1 and d3, respectively, as a result of the transversal rotation gate is considered. Since this state is an incorrect resource state, it is appropriate to reject it. Hereinafter, how a sign of the Pauli operators Z and I that have been sampled is detected will be described.

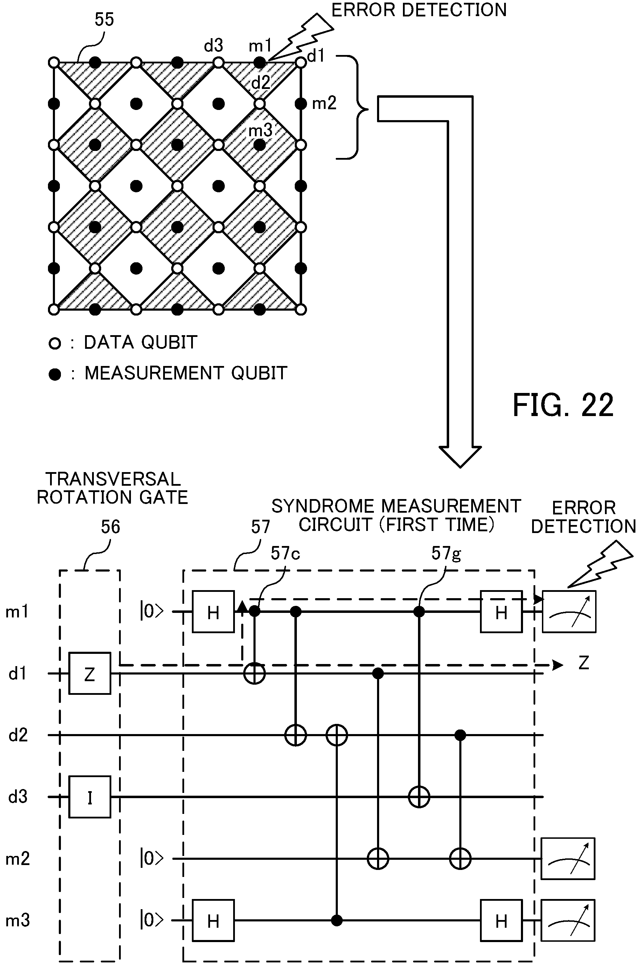

FIG. 22 is a diagram illustrating a first case in which an error state is detected. The first case is a case where no error occurs during execution of the syndrome measurement circuit 57. In this case, the effect of the Pauli operator Z on the data qubit d1 is transferred to the measurement qubit m1 via the CNOT gate 57c. The effect of the Pauli operator I on the data qubit d3 does not affect the measurement qubit m1 even through the CNOT gate 57g. In this case, the eigenvalue of the Z stabilizer measured by the measurement qubit m1 is inverted, and an error is detected. As a result, the state of the logical qubit 55 is rejected as being inappropriate as a resource state.

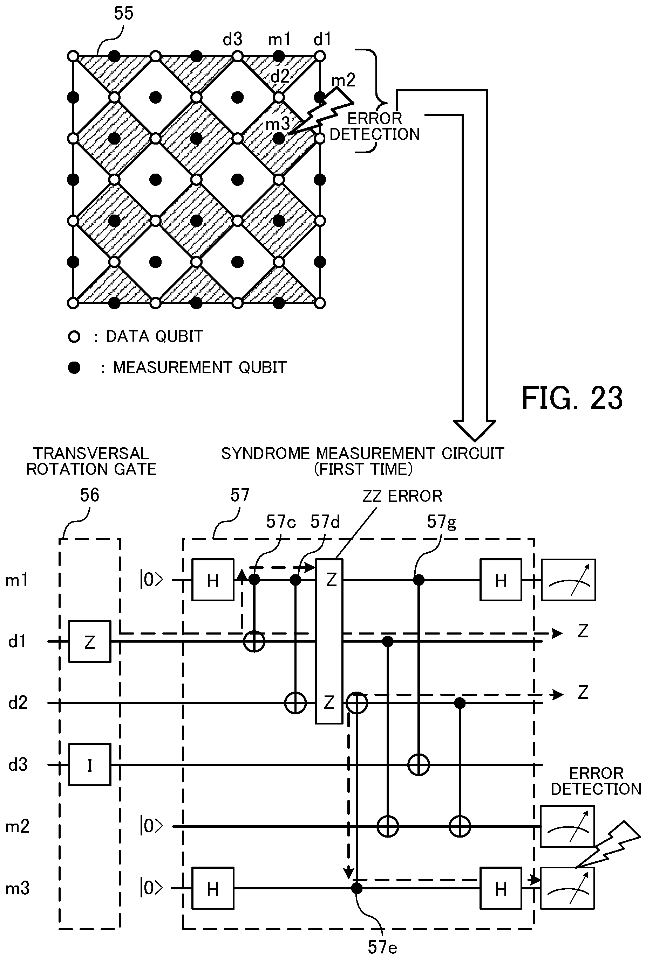

FIG. 23 is a diagram illustrating a second case in which an error state is detected. The second case is a case where an error occurs during execution of the syndrome measurement circuit 57. In the example of FIG. 23, it is assumed that a ZZ error has occurred in the CNOT gate 57d. In this case, although the effect of the Pauli operator Z on the data qubit d1 is transferred to the measurement qubit m1 via the CNOT gate 57c, the effect of the Pauli operator Z is canceled by the error generated by the gate operation of the CNOT gate 57d. As a result, no error is detected from the measurement result of the measurement qubit m1.

On the other hand, due to the error in the CNOT gate 57d, after the gate operation of the CNOT gate 57d, the data qubit d2 is set in a state in which the Pauli operator Z has been applied. The state is transferred to the measurement qubit m3 by the CNOT gate 57e. Then, the eigenvalue of the Z stabilizer measured by the measurement qubit m3 is inverted, and the error is detected.

As described above, when an error occurs in the syndrome measurement circuit 57, the occurrence of the error in the syndrome measurement circuit 57 is detected even if it is not detected that the Pauli string operation by the transversal rotation gate 56 is in the error state. When an error occurs in the syndrome measurement circuit 57, it is not guaranteed that the state of the logical qubit 55 is an ideal resource state, and thus the state of the logical qubit 55 is rejected.

As illustrated in FIG. 23, when an error occurs in the syndrome measurement circuit 57, there are cases where a sign of the Pauli string operation other than II···I and ZZ···Z will not be detected only by the stabilizer operators of the measurement qubits in the uppermost row. Therefore, not only the measurement qubits in the uppermost row but also the measurement qubits up to the third row are used to determine whether the state of the logical qubit 55 has become an ideal resource state.

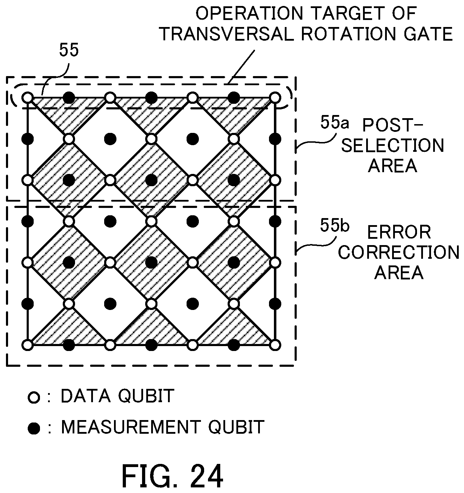

FIG. 24 is a diagram illustrating an example of setting of a post-selection area. Among the data qubits (white circles) constituting the logical qubit 55, the uppermost data qubits are the operation targets of the transversal rotation gate. In the case of the second case illustrated in FIG. 23, when there is an error in the resource state, it is possible to detect the error by the measurement qubits (black circles) up to the third row from the top. Therefore, the area including the physical qubits up to the third row from the top is used as the post-selection area 55a used for rejecting the state of the logical qubit 55 at the time of error detection. Even if an error is detected in an area other than the post-selection area 55a, the error is not used for determination of the post-selection. This area is used as the error correction area 55b in which the error is corrected.

By setting the area, which is affected by the gate operation on the physical qubits as the operation targets of the transversal rotation gate, as the post-selection area 55a as described above, it is possible to execute the post-selection appropriately. In addition, by limiting the post-selection area 55a to the above-described range and by setting the other area as the error correction area 55b, the post-selection area 55a becomes a minimum area, and the probability of successfully generating a resource state is improved.

Next, functions of the quantum computing system 30 that executes quantum computation using phase rotation gates instead of the T gates of Clifford + T will be described in detail.

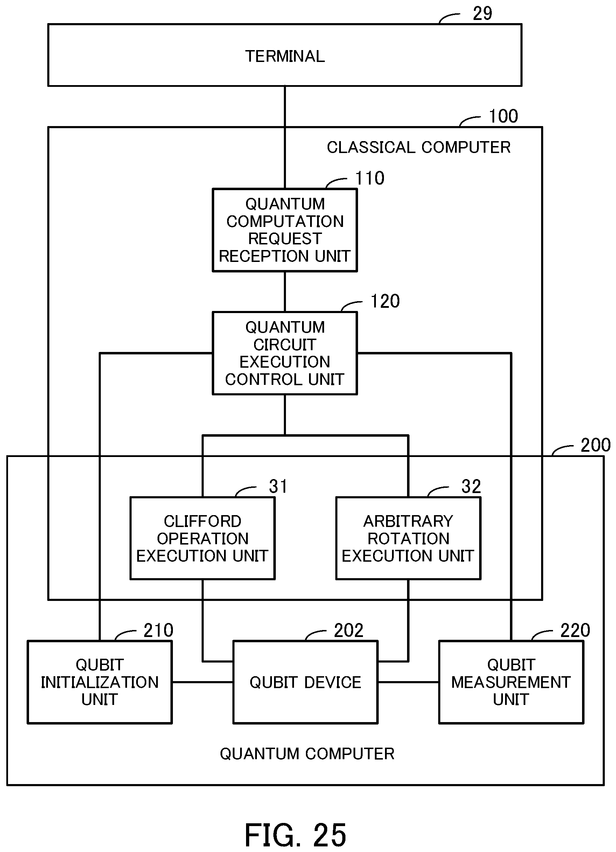

FIG. 25 is a block diagram illustrating an example of quantum computation functions of the quantum computation system. The classical computer 100 includes a quantum computation request reception unit 110 and a quantum circuit execution control unit 120. The quantum computer 200 includes a qubit initialization unit 210 and a qubit measurement unit 220. Functions implemented by the coordination of the classical computer 100 and the quantum computer 200 include a Clifford operation execution unit 31 and an arbitrary rotation execution unit 32.

The quantum computation request reception unit 110 receives a quantum computation request from the terminal 29. The quantum computation request includes, for example, quantum circuits corresponding to a problem to be solved. The quantum computation request reception unit 110 transmits, to the quantum circuit execution control unit 120, quantum circuit execution commands corresponding to the problem to be solved indicated by the quantum computation request. When the quantum computation request reception unit 110 acquires the result of the quantum computation by the quantum circuit from the quantum circuit execution control unit 120, the quantum computation request reception unit 110 transmits the computation result to the terminal 29.

The quantum circuit execution control unit 120 transmits the execution commands of the quantum gates to the quantum computer 200 in the order indicated by the quantum circuits acquired as the execution target. When the quantum circuit execution control unit 120 acquires, from the quantum computer 200, a measurement result indicating a state of a qubit after a gate operation based on a quantum circuit, the quantum circuit execution control unit 120 computes a solution to a problem to be solved based on the measurement result. Then, the quantum circuit execution control unit 120 transmits the solution to the problem to be solved to the quantum computation request reception unit 110 as a result of the quantum computation.

The qubit initialization unit 210 initializes a logical qubit in accordance with a command from the quantum circuit execution control unit 120. For example, the qubit initialization unit 210 initializes the physical qubits constituting a logical qubit in the qubit device 202 to a predetermined state.

The qubit measurement unit 220 measures the state of the logical qubit. For example, the qubit measurement unit 220 measures the state of the physical qubits constituting the logical qubit, and determines the state of the logical qubit based on the measurement result. The qubit measurement unit 220 transmits the measured state of the logical qubit to the classical computer 100.

The classical computer 100 and the quantum computer 200 coordinate with each other such that the Clifford operation execution unit 31 executes a Clifford operation on the logical qubit. For example, in the quantum computer 200, the gate operations of quantum gates corresponding to the Clifford operation are executed on the physical qubits constituting the logical qubit. Then, the Clifford operation execution unit 31 executes the syndrome measurement of the operated physical qubits. The Clifford operation execution unit 31 detects an error based on the result of the syndrome measurement. If an error is detected, the Clifford operation execution unit 31 determines the location of the error, and executes a gate operation on the physical qubit at the error location such that the error is corrected.

Among the functions of the Clifford operation execution unit 31, error detection and error location determination are executed by the classical computer 100. The quantum computer 200 executes the gate operations of quantum gates corresponding to the Clifford operation, the syndrome measurement, and the error correction.

The classical computer 100 and the quantum computer 200 coordinate with each other such that the arbitrary rotation execution unit 32 executes a gate operation of an arbitrary rotation on the logical qubit.

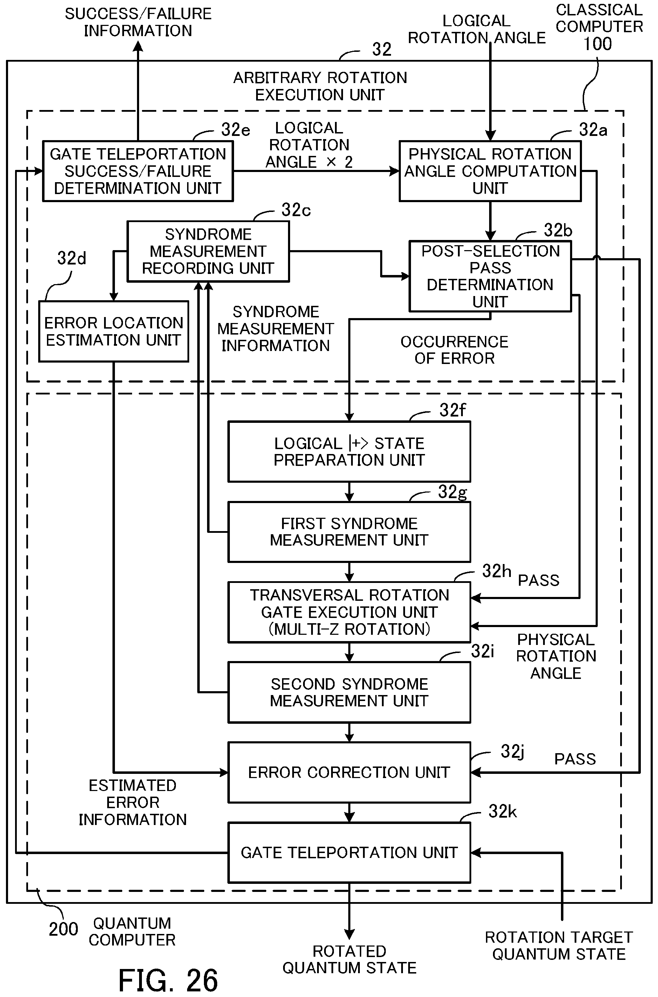

FIG. 26 is a block diagram illustrating an example of functions of the arbitrary rotation execution unit. The functions of the arbitrary rotation execution unit 32, the functions being implemented by the classical computer 100, include a physical rotation angle computation unit 32a, a post-selection pass determination unit 32b, a syndrome measurement recording unit 32c, an error location estimation unit 32d, and a gate teleportation success/failure determination unit 32e.

The physical rotation angle computation unit 32a converts a logical rotation angle into a physical rotation angle. For example, the physical rotation angle computation unit 32a computes the physical rotation angle based on the following equation.

$$\theta_*/2 = \arcsin\left(\frac{\sin^d(\theta/2)}{\sin^{2d}(\theta/2) + \cos^{2d}(\theta/2)}\right) \qquad (9)$$

The physical rotation angle computation unit 32a computes a value of a physical rotation angle $\theta$ such that a logical rotation angle $\theta_*$ becomes a target angle based on Equation (9). The physical rotation angle computation unit 32a transmits the computed value of the physical rotation angle $\theta$ to a transversal rotation gate execution unit 32h. The physical rotation angle computation unit 32a notifies the post-selection pass determination unit 32b that the setting of the physical rotation angle $\theta$ is completed.

Upon receiving a command to double the logical rotation angle from the gate teleportation success/failure determination unit 32e, the physical rotation angle computation unit 32a computes the physical rotation angle $\theta$ based on the corrected logical rotation angle. Then, the physical rotation angle computation unit 32a transmits the computed value of the physical rotation angle $\theta$ to the transversal rotation gate execution unit 32h and notifies the post-selection pass determination unit 32b that the setting of the physical rotation angle $\theta$ is completed.

When the setting of the physical rotation angle $\theta$ is completed, the post-selection pass determination unit 32b transmits a preparation command of the logical $|+\rangle$ state to a logical $|+\rangle$ state preparation unit 32f. The post-selection pass determination unit 32b acquires syndrome measurement information from the syndrome measurement recording unit 32c, and determines the presence or absence of an error based on the syndrome measurement information. When detecting an error in the post-selection area, the post-selection pass determination unit 32b instructs the logical $|+\rangle$ state preparation unit 32f to prepare the logical $|+\rangle$ state.

When the syndrome measurement information obtained from a first syndrome measurement unit 32g does not indicate the occurrence of an error in the post-selection area, the post-selection pass determination unit 32b notifies the transversal rotation gate execution unit 32h that the error detection process has passed. When the syndrome measurement information obtained from a second syndrome measurement unit 32i does not indicate the occurrence of an error in the post-selection area, the post-selection pass determination unit 32b notifies an error correction unit 32j that the error detection process has passed.

The syndrome measurement recording unit 32c acquires syndrome measurement information indicating a result of the syndrome measurement from the first syndrome measurement unit 32g or the second syndrome measurement unit 32i. Then, the syndrome measurement recording unit 32c records the acquired syndrome measurement information in the memory 102 or the storage device 103.

The error location estimation unit 32d estimates an error location in the error correction area in accordance with the encoding method applied to the encoding of the logical qubit based on the syndrome measurement information. When the physical qubit at the error location is determined, the error location estimation unit 32d transmits estimated error information indicating the location of the physical qubit and the content of the error to the error correction unit 32j.

The gate teleportation success/failure determination unit 32e determines whether the arbitrary rotation of the logical qubit by a gate teleportation unit 32k is the forward rotation "$R_Z(\theta)|\psi\rangle_L$" or the reverse rotation "$R_Z(-\theta)|\psi\rangle_L$". In the

case of the forward rotation, the gate teleportation success/failure determination unit 32e outputs success/failure information indicating that the gate operation of the arbitrary rotation is completed. In addition, in the case of the reverse rotation, the gate teleportation success/failure determination unit 32e instructs the physical rotation angle computation unit 32a to double the physical rotation angle.

The functions of the arbitrary rotation execution unit 32, the functions being implemented by the quantum computer 200, include the logical $|+\rangle$ state preparation unit 32f, the first syndrome measurement unit 32g, the transversal rotation gate execution unit 32h, the second syndrome measurement unit 32i, the error correction unit 32j, and the gate teleportation unit 32k.

The logical $|+\rangle$ state preparation unit 32f prepares the logical $|+\rangle$ state of the logical qubit in accordance with a command from the post-selection pass determination unit 32b.

The first syndrome measurement unit 32g executes the syndrome measurement of the logical qubit in the logical $|+\rangle$ state. The first syndrome measurement unit 32g transmits syndrome measurement information indicating a result of the syndrome measurement to the syndrome measurement recording unit 32c.

The transversal rotation gate execution unit 32h executes the gate operation of the transversal rotation gate based on the multi-Z rotation gate when it is determined that the syndrome measurement executed by the first syndrome measurement unit 32g has not detected an error and that the error detection process has passed. For example, the transversal rotation gate execution unit 32h decomposes the multi-Z rotation gate into a plurality of CNOT gates and a phase rotation gate, and generates a quantum circuit (equivalent circuit) corresponding to the multi-Z rotation gate. Then, the transversal rotation gate execution unit 32h executes the gate operation based on the equivalent circuit on the physical qubits as the operation targets of the transversal rotation gate.

The second syndrome measurement unit 32i executes the syndrome measurement on the logical qubit after the gate operation of the transversal rotation gate. The second syndrome measurement unit 32i transmits syndrome measurement information indicating the result of the syndrome measurement to the syndrome measurement recording unit 32c.

The error correction unit 32j corrects the error at the error location based on the estimated error information when no error is detected in the syndrome measurement by the second syndrome measurement unit 32i and the error detection process has passed. For example, the error correction unit 32j executes the gate operation of an X gate on a physical qubit in which an X inversion error has occurred. In addition, the error correction unit 32j executes the gate operation of a Z gate on a physical qubit in which a Z inversion error has occurred.

The gate teleportation unit 32k uses the resource state to execute an arbitrary rotation on the quantum state of the logical qubit as the rotation target. As a result, the logical qubit as the operation target is set in a rotated quantum state. The gate teleportation unit 32k notifies the gate teleportation success/failure determination unit 32e of information indicating the post-rotation state of the logical qubit.

Next, a process procedure in the quantum computing system 30 when a quantum circuit configured with "Clifford + $\varphi$ (arbitrary rotation)" is executed will be described.

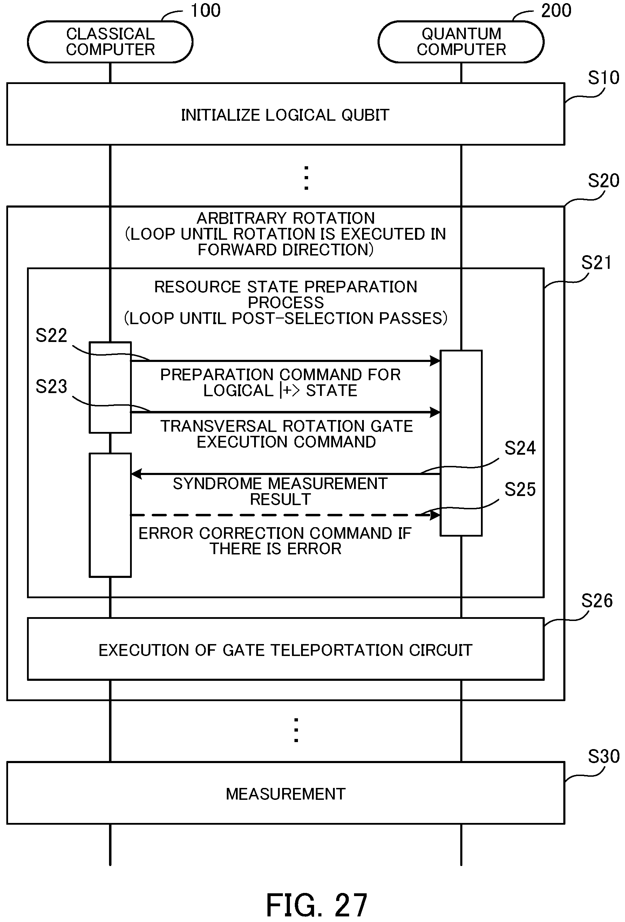

FIG. 27 is a sequence diagram illustrating an example of a process procedure of computation of a quantum circuit. In FIG. 27, the gate operations of the Clifford gates are omitted. First, the classical computer 100 and the quantum computer 200 coordinate with each other to initialize a logical qubit (step S10). Thereafter, the classical computer 100 and the quantum computer 200 coordinate with each other to sequentially execute the quantum gate operations illustrated in a quantum circuit.

When the quantum gate to be executed is an arbitrary rotation gate, the classical computer 100 and the quantum computer 200 coordinate with each other to execute a gate operation of an arbitrary rotation based on a STAR architecture (step S20). In the arbitrary rotation process, since the rotation becomes the reverse rotation of the target rotation with a probability of 1/2, the rotation gate operation is repeated until the rotation is executed in the forward direction while updating the rotation angle. The arbitrary rotation process is divided into a resource state preparation process (step S21) and a gate teleportation circuit execution process (step S26).

In the resource state preparation process (step S21), first, the classical computer 100 transmits a preparation command for the logical $|+\rangle$ state to the quantum computer 200 (step S22). The quantum computer 200 executes a gate operation such that the logical qubit on which the arbitrary rotation is executed will be in the $|+\rangle$ state in accordance with the preparation command of the logical $|+\rangle$ state.

Next, the classical computer 100 transmits a transversal rotation gate execution command to the quantum computer 200 (step S23). The quantum computer 200 executes the gate operation of the transversal rotation gate on the logical qubit and then executes a syndrome measurement on the logical qubit. Next, the quantum computer 200 transmits the syndrome measurement result to the classical computer 100 (step S24).

The classical computer 100 executes pass determination of the post-selection based on the syndrome measurement result. When detecting an error, the classical computer 100 transmits an error correction command to the quantum computer 200 (step S25). The quantum computer 200 executes a gate operation for correcting the generated error in response to the error correction command.

The resource state preparation process is repeated until the post-selection passes. When the resource state preparation process is completed, the classical computer 100 and the quantum computer 200 coordinate with each other to execute the gate teleportation circuit (step S26).

The classical computer 100 and the quantum computer 200 execute the arbitrary rotation process (step S20) at each execution timing of the quantum gate of the arbitrary rotation in the quantum circuit. When all the data operations of the quantum circuit are completed, the classical computer 100 and the quantum computer 200 coordinate with each other to measure the quantum state (step S30). The classical computer 100 obtains a solution of the problem to be solved from the measurement result of the quantum state, and outputs the solution.

As described above, the quantum computation is executed by a coordination process between the classical computer 100 and the quantum computer 200. Hereinafter, a process executed by the classical computer 100 in quantum computation will be described.

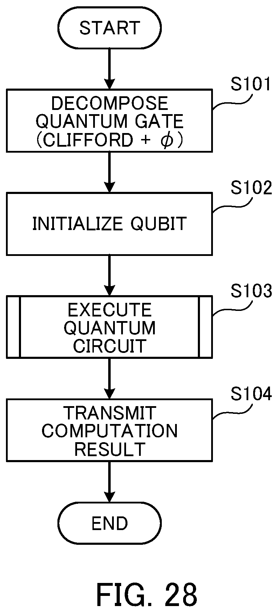

FIG. 28 is a flowchart illustrating an example of a procedure of a quantum computation process executed by the classical computer. Hereinafter, the process illustrated in FIG. 28 will be described in order of step numbers.

[Step S101] When the quantum computation request reception unit 110 acquires a quantum computation request from the terminal 29, the quantum computation request reception unit 110 decomposes a quantum gate (for example, a 3-qubit gate) in the computation target quantum circuit, and converts the quantum gate into a quantum circuit in which quantum gates of "Clifford + $\varphi$ (arbitrary rotation)" are combined.

[Step S102] The quantum circuit execution control unit 120 initializes the logical qubit. For example, the quantum circuit execution control unit 120 determines the physical qubits to be used for execution of the quantum circuit, and transmits an initialization command for the physical qubits to the qubit initialization unit 210 of the quantum computer 200. The qubit initialization unit 210 initializes the state of the physical qubits to a predetermined state in accordance with the initialization command.

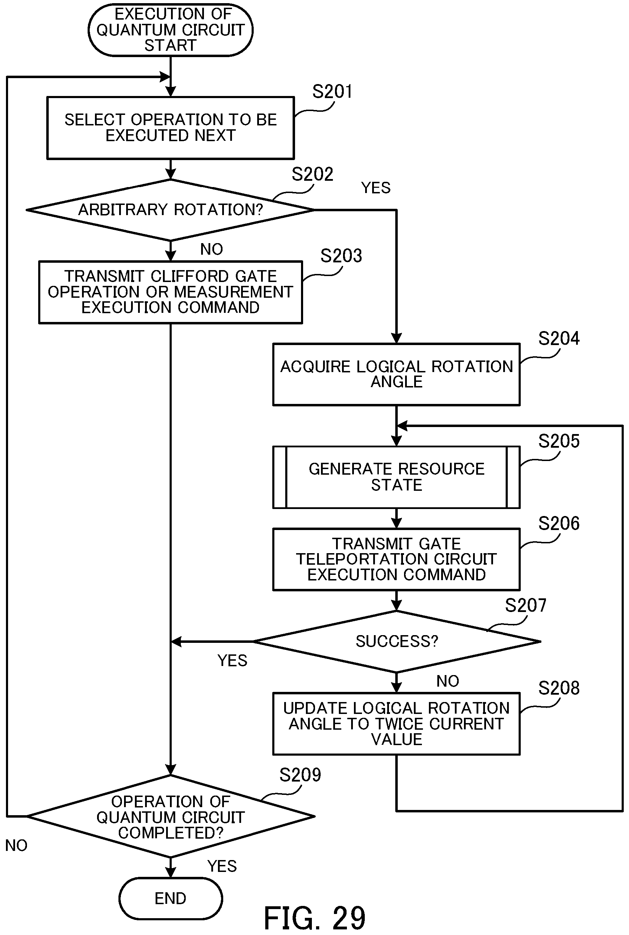

[Step S103] When the quantum circuit execution control unit 120 receives a response of completion of the initialization from the qubit initialization unit 210, the quantum circuit execution control unit 120 executes a quantum circuit execution process. Details of the quantum circuit execution process will be described below (see FIG. 29).

[Step S104] When the execution of the quantum circuit is completed and the measurement result of the final state of the logical qubit is acquired, the quantum circuit execution control unit 120 computes a solution of the problem to be solved based on the measurement result. Then, the quantum circuit execution control unit 120 transmits the computation result to the quantum computation request reception unit 110. The quantum computation request reception unit 110 transmits the computation result to the terminal 29.

In this way, the quantum computation using the quantum circuit is executed. Next, the quantum circuit execution process will be described in detail.

FIG. 29 is a flowchart illustrating an example of a procedure of the quantum circuit execution process. Hereinafter, the process illustrated in FIG. 29 will be described in order of step numbers.

[Step S201] The quantum circuit execution control unit 120 selects an operation (a gate operation or measurement) to be executed next from the quantum circuit.

[Step S202] The quantum circuit execution control unit 120 determines whether the selected operation is the gate operation of a quantum gate of an arbitrary rotation. If the next quantum gate is a gate operation of the Clifford gate or measurement, the quantum circuit execution control unit 120 advances the process to step S203. If the next quantum gate is a quantum gate of an arbitrary rotation, the quantum circuit execution control unit 120 advances the process to step S204.

[Step S203] The quantum circuit execution control unit 120 transmits, to the quantum computer 200, an execution command for the gate operation of the Clifford gate or measurement to be executed next. If the transmitted command is a gate operation command of the Clifford gate, the Clifford operation execution unit 31 in the quantum computer 200 executes the gate operation of the Clifford gate on the logical qubit. If the transmitted command is a measurement command, the qubit measurement unit 220 measures the state of the physical qubits constituting the logical qubit. The qubit measurement unit 220 transmits the measurement result to the quantum circuit execution control unit 120. Thereafter, the quantum circuit execution control unit 120 advances the process to step S209.

[Step S204] The quantum circuit execution control unit 120 causes the arbitrary rotation execution unit 32 to acquire a logical rotation angle.

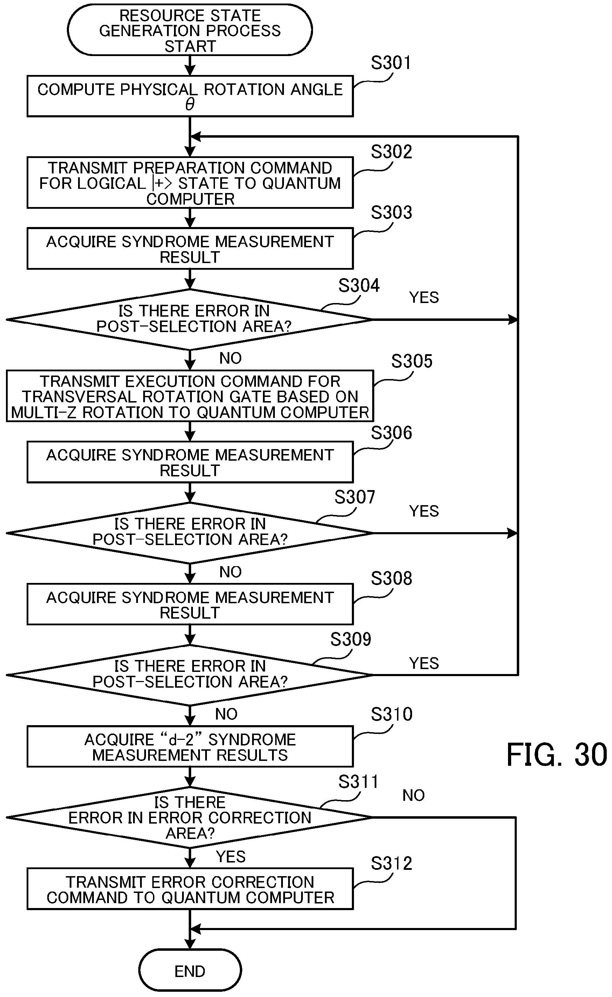

[Step S205] The arbitrary rotation execution unit 32 executes a resource state generation process. Details of the resource state generation process will be described below (see FIG. 30).

[Step S206] The arbitrary rotation execution unit 32 transmits a gate teleportation circuit execution command to the quantum computer 200. Next, the gate teleportation unit 32k provided in the quantum computer 200 executes a gate operation based on the gate teleportation circuit using the logical qubit indicating the quantum state to be rotated and the logical qubit indicating the resource state as inputs.

[Step S207] The gate teleportation success/failure determination unit 32e determines whether the arbitrary rotation using the gate teleportation circuit has succeeded. If the forward rotation has been executed, the gate teleportation success/failure determination unit 32e determines success, and advances the process to step S209. On the other hand, if the reverse rotation has been executed, the gate teleportation success/failure determination unit 32e determines failure, and advances the process to step S208.

[Step S208] The gate teleportation success/failure determination unit 32e updates the logical rotation angle to twice the current value, and transmits the updated logical rotation angle to the physical rotation angle computation unit 32a. Thereafter, the gate teleportation success/failure determination unit 32e advances the process to step S205.

[Step S209] The quantum circuit execution control unit 120 determines whether the last operation of the quantum circuit has been completed. If the last operation of the quantum circuit is completed, the quantum circuit execution control unit 120 ends the quantum circuit execution process. If there is an unprocessed operation, the quantum circuit execution control unit 120 advances the process to step S201.

Next, the resource state generation process will be described in detail.

FIG. 30 is a flowchart illustrating an example of a procedure of the resource state generation process. Hereinafter, the process illustrated in FIG. 30 will be described in order of step numbers.

[Step S301] The physical rotation angle computation unit 32a computes a physical rotation angle based on the logical rotation angle. For example, the physical rotation angle computation unit 32a computes the physical rotation angle $\theta$ such that the value of the right side of Equation (9) becomes a predetermined logical rotation angle $\theta_*$.

[Step S302] The post-selection pass determination unit 32b transmits a preparation command for the logical $|+\rangle$ state to the logical $|+\rangle$ state preparation unit 32f of the quantum computer 200. Next, the logical $|+\rangle$ state preparation unit 32f executes a gate operation on at least a part of the physical qubits constituting the logical qubit so that the state of the logical qubit to be arbitrarily rotated becomes $|+\rangle_L$. Thereafter, the first syndrome measurement unit 32g executes the syndrome measurement on the logical qubit.

[Step S303] The post-selection pass determination unit 32b acquires the syndrome measurement result from the first syndrome measurement unit 32g.

[Step S304] The post-selection pass determination unit 32b determines whether there is an error in the post-selection area based on the syndrome measurement result. If there is an error, the post-selection pass determination unit 32b advances the process to step S302 and redoes the preparation of the logical $|+\rangle$ state. If there is no error, the post-selection pass determination unit 32b advances the process to step S305.

[Step S305] The post-selection pass determination unit 32b transmits an execution command for the transversal rotation gate based on multi-Z rotation to the transversal rotation gate execution unit 32h of the quantum computer 200. Then, the transversal rotation gate execution unit 32h executes the gate operation of the transversal rotation gate based on the multi-Z rotation gate. Thereafter, the second syndrome measurement unit 32i repeatedly executes the syndrome measurement on the logical qubit d times (d is the code distance). The syndrome measurement recording unit 32c records syndrome measurement information indicating a syndrome measurement result every time the second syndrome measurement unit 32i executes the syndrome measurement.

[Step S306] The syndrome measurement recording unit 32c acquires syndrome measurement information indicating the first syndrome measurement result from the second syndrome measurement unit 32i. Next, the post-selection pass determination unit 32b acquires the first syndrome measurement result from the syndrome measurement recording unit 32c.

[Step S307] The post-selection pass determination unit 32b determines whether there is an error in the post-selection area based on the first syndrome measurement result. If there is an error in the post-selection area, the post-selection pass determination unit 32b redoes the preparation of the logical $|+\rangle$ state. If there is no error in the post-selection area, the post-selection pass determination unit 32b advances the process to step S308.

[Step S308] The syndrome measurement recording unit 32c acquires syndrome measurement information indicating the second syndrome measurement result from the second syndrome measurement unit 32i. Next, the post-selection pass determination unit 32b acquires the second syndrome measurement result from the syndrome measurement recording unit 32c.

[Step S309] The post-selection pass determination unit 32b determines whether there is an error in the post-selection area based on the second syndrome measurement result. If there is an error in the post-selection area, the post-selection pass determination unit 32b advances the process to step 302 and redoes the preparation of the logical $|+\rangle$ state. If there is no error in the post-selection area, the post-selection pass determination unit 32b advances the process to step S310.

The post-selection pass determination unit 32b executes the error determination twice in the post-selection area based on the syndrome measurement result in order to suppress the omission of the error detection due to the gate operation of the transversal rotation gate caused by an error that occurs at the time of execution of the syndrome measurement circuit.

[Step S310] The syndrome measurement recording unit 32c acquires "d-2" syndrome measurement results from the third syndrome measurement to the d-th syndrome measurement from the second syndrome measurement unit 32i. Next, the error location estimation unit 32d acquires the d syndrome measurement results in the error correction area from the syndrome measurement recording unit 32c.

[Step S311] The error location estimation unit 32d determines whether there is an error in the error correction area based on the acquired syndrome measurement results. If there is an error, the error location estimation unit 32d advances the process to step S312. If there is no error, the error location estimation unit 32d ends the resource state generation process.

[Step S312] The error location estimation unit 32d transmits estimated error information indicating the error location and the error content to the error correction unit 32j of the quantum computer 200, and ends the resource state generation process.

In this manner, the gate operation of the transversal rotation gate based on the multi-Z rotation gate is executed, and the resource state is generated. By generating the resource state in this way, the probability of successfully generating a resource state is improved, and an efficient arbitrary rotation gate operation is achieved. Hereinafter, the effect of improving the probability of successfully generating a resource state will be described in detail using a specific example.

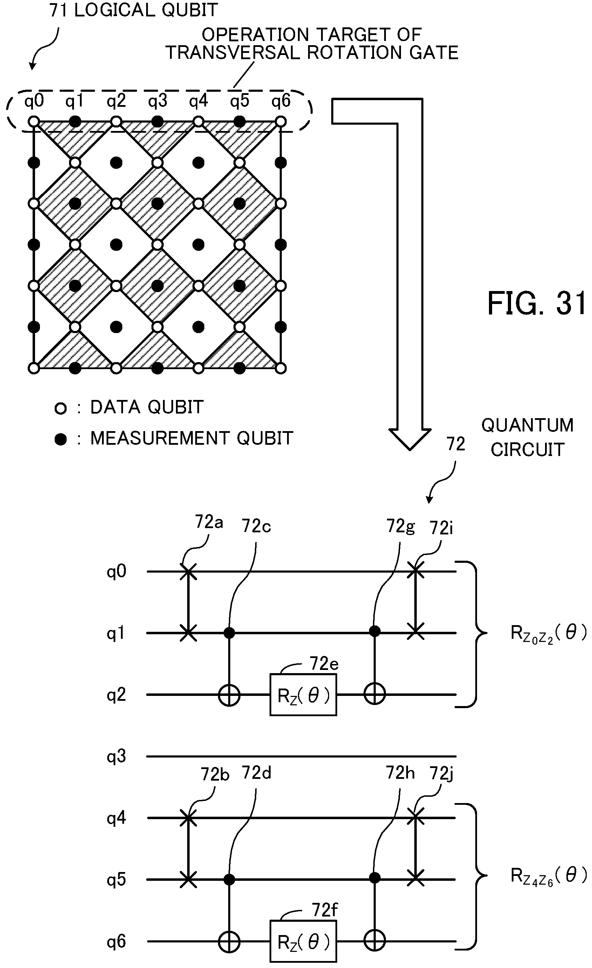

FIG. 31 is a diagram illustrating an example of a method of implementing a transversal rotation gate based on a multi-Z rotation gate on hardware in which a 2-qubit gate is limited to only between nearest-neighbor qubits. A logical qubit 71 used for a resource state is encoded with a code distance "d = 4". It is assumed that the gate operation of a transversal rotation gate based on a multi-Z rotation gate ($R_{ZZ}(\theta)$) having a weight "2" is executed on the logical qubit 71.

The operation target of the transversal rotation gate is the uppermost data qubits among the physical qubits constituting the logical qubit 71. The identifiers of the seven physical qubits in the uppermost row of the logical qubit 71 are "q0, q1, ⋯, q6". "q0, q2, q4, q6" are data qubits. "q1, q3, q5" are measurement qubits.

The transversal rotation gate may be implemented by a quantum circuit 72. In the quantum circuit 72, first, a control Z gate 72a for the data qubit "q0" and the measurement qubit "q1" and a control Z gate 72b for the data qubit "q4" and the measurement qubit "q5" are disposed.

Next to the control Z gate 72a, a CNOT gate 72c using the measurement qubit "q1" as a control qubit and the data qubit "q2" as a target qubit is disposed. Next to the control Z gate 72b, a CNOT gate 72d using the measurement qubit "q5" as a control qubit and the data qubit "q6" as a target qubit is disposed.

Next to the CNOT gate 72c, a phase rotation gate 72e for the data qubit "q2" is disposed. Next to the CNOT gate 72d, a phase rotation gate 72f for the data qubit "q6" is disposed.

Next to the phase rotation gate 72e, a CNOT gate 72g using the measurement qubit "q1" as a control qubit and the data qubit "q2" as a target qubit is disposed. Next to the phase rotation gate 72f, a CNOT gate 72h using the measurement qubit "q5" as a control qubit and the data qubit "q6" as a target qubit is disposed.

Next to the CNOT gate 72g, a control Z gate 72i for the data qubit "q0" and the measurement qubit "q1" is disposed. Next to the CNOT gate 72h, a control Z gate 72j for the data qubit "q4" and the measurement qubit "q5" is disposed.

The control Z gate 72a, the CNOT gate 72c, the phase rotation gate 72e, the CNOT gate 72g, and the control Z gate 72i implement a 2-qubit rotation gate "$R_{Z0Z2}(\theta)$" (each number following a Z is a subscript of the corresponding Z) for the data qubits "q0 and q2". The control Z gate 72b, the CNOT gate 72d, the phase rotation gate 72f, the CNOT gate 72h, and the control Z gate 72j implement a 2-qubit rotation gate "$R_{Z4Z6}(\theta)$" (each number following a Z is a subscript of the corresponding Z) for the data qubits "q4 and q6".

FIG. 31 illustrates an implementation example of a 2-qubit rotation gate. However, it is possible to implement a 3-qubit or more rotation gate by adding a control Z gate and a CNOT gate.

Hereinafter, how the success probability changes depending on the difference in the Z-weight number (m) of the rotation gate under a situation where there is no error will be described.

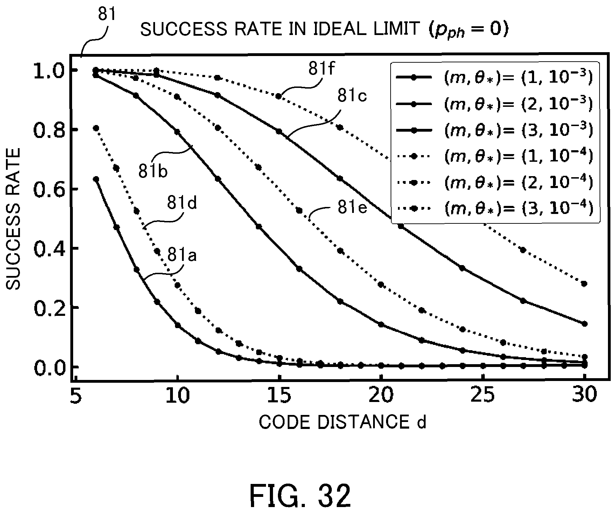

FIG. 32 is a diagram illustrating an example of the success probability of resource state generation when there is no error. In a graph 81, the horizontal axis represents the code distance, and the vertical axis represents the probability of successfully generating a resource state. The probability of successfully generating a resource state is a value obtained based on an analytical formula. For example, when a transversal rotation gate specified by the parameters (m, k, d) is executed, a success probability $p^{(0)}_{sample}(\theta_*, k)$ in the ideal limit in which no error exists is given by Equation (10).

$$p^{(0)}_{sample}(\theta_*, k) = \cos^{2k}(\theta_*/2) + \sin^{2k}(\theta_*/2) \qquad (10)$$

As illustrated in Equation (10), the success probability monotonically decreases with respect to k. In addition, since "k = d/m" is established, the success probability is higher when multi-Z rotation having a larger Z-Weight (m) is executed.

A polygonal line 81a of the graph 81 indicates the relationship between the code distance and the success probability in the case of "(m, $\theta_*$) = (1, 10⁻³)". A polygonal line 81b indicates the relationship between the code distance and the success probability in the case of "(m, $\theta_*$) = (2, 10⁻³)". A polygonal line 81c indicates the relationship between the code distance and the success probability in the case of "(m, $\theta_*$) = (3, 10⁻³)". A polygonal line 81d indicates the relationship between the code distance and the success probability in the case of "(m, θ∗) = (1, 10⁻⁴)". A polygonal line 81e indicates the relationship between the code distance and the success probability in the case of "(m, θ∗) = (2, 10⁻⁴)". A polygonal line 81f indicates the relationship between the code distance and the success probability in the case of "(m, θ∗) = (3, 10⁻⁴)".

In the graph 81, in the case of the logical rotation angle "θ = 10⁻³", the polygonal line 81b of "m = 2" is always above the polygonal line 81a of "m = 1" (the success probability is higher), and the polygonal line 81c of "m = 3" is always above the polygonal line 81b of "m = 2" (the success probability is higher). In the case of the logical rotation angle "θ = 10⁻⁴", the polygonal line 81e of "m = 2" is always above the polygonal line 81d of "m = 1" (the success probability is higher), and the polygonal line 81f of "m = 3" is always above the polygonal line 81e of "m = 2" (the success probability is higher).

Next, a numerical comparison result of the pass probabilities of the post-selection when there is an error will be described.

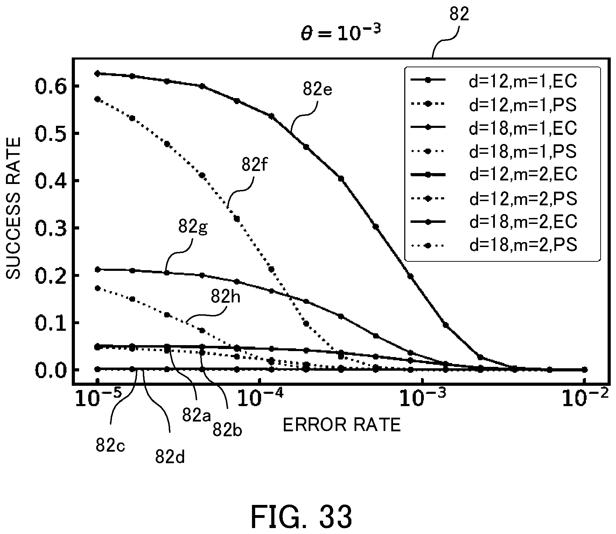

FIG. 33 is a diagram illustrating an example of the success probability in the pass determination of the resource state generation, using different resource state generation methods. In a graph 82, the horizontal axis represents the error rate of the physical qubits, and the vertical axis represents the success probability in the pass determination of the resource state generation. The graph 82 illustrates the success probability with respect to the error rate when the simulation is executed under the following conditions.

Logical qubits are encoded with an unrotated surface code. There are two code distances d: "d = 12" and "d = 18". An error based on a circuit-level noise model is introduced. Success probabilities in the pass determination of a method in which the multi-Z rotation gate is not used (m = 1) and a method in which the multi-Z rotation gate is used (m = 2) are computed by simulations. For post-selection, both simple post-selection (rejecting a state that includes an error at any position) and a hybrid method (rejecting a state that includes an error in a partial area and correcting an error in another area) are verified.

The results of the simulations under these conditions are indicated by polygonal lines 82a to 82h in the graph 82 (dotted lines for the simple post-selection, and solid lines for the hybrid method). A polygonal line 82a indicates the success probability when the hybrid method is applied with the code distance "d = 12" and the Z-weight number "m = 1" of the rotation gate. A polygonal line 82b indicates the success probability when the simple post-selection is applied with the code distance is "d = 12" and the Z-weight number "m = 1" of the rotation gate. A polygonal line 82c indicates the success probability when the hybrid method is applied with the code distance "d = 18" and the Z-weight number "m = 1" of the rotation gate. A polygonal line 82d indicates the success probability when the simple post-selection is applied with the code distance "d = 18" and the Z-weight number "m = 1" of the rotation gate.

A polygonal line 82e indicates the success probability when the hybrid method is applied with the code distance "d = 12" and the Z-weight number "m = 2" of the rotation gate. A polygonal line 82f indicates the success probability when the simple post-selection is applied with the code distance "d = 12" and the Z-weight number "m = 2" of the rotation gate. A polygonal line 82g indicates the success probability when the hybrid method is applied with the code distance "d = 18" and the Z-weight number "m = 2" of the rotation gate. A polygonal line 82h indicates the success probability when the simple post-selection is applied with the code distance "d = 18" and the Z-weight number "m = 2" of the rotation gate.

As illustrated in the graph 82, if the other conditions are the same, the success probability of the hybrid method (solid polygonal lines) is higher than that of the simple post-selection (dotted broken lines). Even in the hybrid method, the success probability is further improved by implementing the transversal rotation gate as a multi-Z rotation gate (m = 2).

Next, an error reduction effect obtained by implementing a transversal rotation gate based on a multi-Z rotation gate will be described. The error of the quantum state is attributable to two kinds of components, which are diagonal and non-diagonal components. The type of error differs depending on an individual index for evaluating the error. Examples of the error evaluation indices include infidelity and trace distance.

The infidelity is expressed by Equation (11).

$$1 - F \equiv 1 - \langle \psi_{\text{ideal}} | \rho_{\text{error}} | \psi_{\text{ideal}} \rangle \qquad (11)$$

F is fidelity. $\psi_{\text{ideal}}$ is an ideal state. $\rho_{\text{error}}$ is a state including an error. The infidelity is an index that evaluates only the diagonal error. Therefore, the accuracy of the error evaluation is not high. The trace distance $D_{\text{tr}}(\rho_{\text{error}}, \psi)$ is expressed by Equation (12).

$$D_{\text{tr}}(\rho_{\text{error}}, \psi) \equiv \frac{1}{2} Tr | \rho_{\text{error}} - | \psi_{\text{ideal}} \rangle \langle \psi_{\text{ideal}} | | \qquad (12)$$

The trace distance is an index that evaluates the influence of the non-diagonal error. Therefore, the evaluation result of the error reduction effect using the trace distance, which is more accurate than the infidelity, will be described. The smaller the value of the trace distance is, the less the influence of noise will be, that is, the higher the accuracy of the resource state will be.

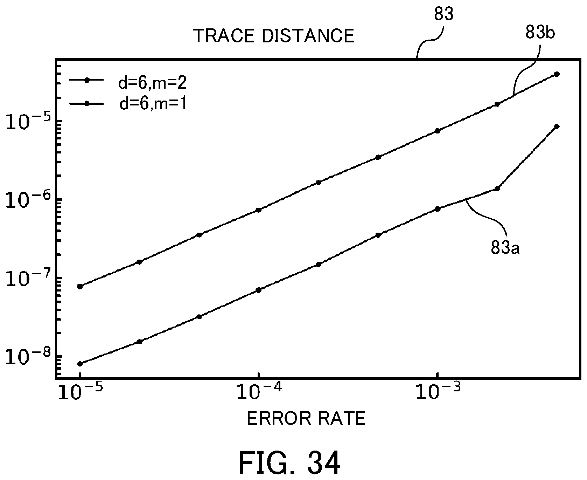

FIG. 34 is a diagram illustrating an example of a comparison result of trace distances. In a graph 83, the horizontal axis represents the error rate of the physical qubits, and the vertical axis represents the trace distance. The graph 83 illustrates the trace distance corresponding to the error rate when the simulation is executed under the following conditions.

Logical qubits are encoded with an unrotated surface code. The code distance d is "d = 6". An error based on a circuit-level noise model is introduced. The results of numerical simulations of the error rate of the resource state output by a method in which the multi-Z rotation gate (m = 1) is not used and a method in which the multi-Z rotation gate (m = 2) is used are illustrated by polygonal lines 83a and 83b in the graph 83.

The polygonal line 83a indicates the trace distance when "m = 2". The polygonal line 83b indicates the trace distance when "m = 1". As seen from the graph 83, the trace distance is reduced by using the multi-Z rotation gate. That is, improvement of the error rate is achieved.

Although the embodiments have been described above as examples, the configuration of a unit described in the embodiments may be replaced with another configuration having an equivalent function. Any other components or steps may be added. Furthermore, any two or more configurations (features) of the above-described embodiments may be combined.

According to one aspect, the efficiency of generating a resource state is improved.

In any of the above aspects, the various features may be implemented in hardware, or as software modules running on one or more processors/computers.

The invention also provides a computer program or a computer program product comprising instructions which, when executed by a computer, cause the computer to carry out any of the methods/method steps described herein, and a non-transitory computer-readable medium comprising instructions which, when executed by a computer, cause the computer to carry out any of the methods/method steps described herein. A computer program embodying the invention may be stored on a non-transitory computer-readable medium, or it could, for example, be in the form of a signal such as a downloadable data signal provided from an Internet website, or it could be in any other form.

**Claims**

1. A computer program that causes a computer to execute a process comprising:

   determining, based on a logical rotation angle for rotating a state of a logical qubit (2) encoded with a code distance d, around a predetermined axis, a physical rotation angle around the predetermined axis to be applied to d first physical qubits (4) among a plurality of physical qubits (3) constituting the logical qubit (2), the d being an integer of 2 or more; and
   instructing a quantum computer (1) including the plurality of physical qubits (3) to execute a rotation gate operation of rotating a state of each of the d first physical qubits (4) around the predetermined axis by the physical rotation angle, by specifying application of an m-qubit rotation gate to a physical qubit group (4a, 4b) in which m first physical qubits among the d first physical qubits (4) are collected, the m-qubit rotation gate being to rotate states of the m first physical qubits by one rotation gate operation, the m being an integer between 2 and d, inclusive.

2. The computer program according to claim 1, wherein the instructing of execution of the rotation gate operation includes generating a quantum circuit (5) that implements a gate operation of the m-qubit rotation gate with a plurality of CNOT gates and one 1-qubit rotation gate and instructing the quantum computer (1) to execute the generated quantum circuit (5).

3. The computer program according to claim 1 or 2,

   wherein the instructing of execution of the rotation gate operation includes instructing the quantum computer (1) to execute the rotation gate operation on the d first physical qubits (4) of the logical qubit (2) in a logical |+⟩ state, and
   wherein, the process further includes
   acquiring an error detection result of the plurality of physical qubits (3) from the quantum computer (1),
   instructing the quantum computer (1) to execute a gate operation of resetting the logical qubit (2) to the logical |+⟩ state and to redo the rotation gate operation upon detecting an error in a post-selection area (6) including at least the d first physical qubits (4) in an area where the plurality of physical qubits (3) exist, and
   instructing, upon detecting an error in an error correction area (7) other than the post-selection area (6) in the area where the plurality of physical qubits (3) exist, the quantum computer (1) to correct the detected error.

4. The computer program according to claim 3, wherein the process further includes

causing, upon detecting no error about the plurality of physical qubits (3), the quantum computer (1) to execute a gate teleportation circuit using the state of the logical qubit (2) after the rotation gate operation, and
causing, upon detecting an error in the error correction area (7), the quantum computer (1) to correct the error and to execute a gate teleportation circuit using the state of the logical qubit (2) after correcting the error.

5. The computer program according to claim 3 or 4,

wherein the post-selection area is an area including first measurement qubits capable of detecting an error of the d first physical qubits (4) and second measurement qubits capable of detecting an error generated by a gate operation on the first measurement qubits, among a plurality of measurement qubits used for syndrome measurement on the plurality of physical qubits, and
wherein the error correction area is an area including remaining third measurement qubits other than the first measurement qubits and the second measurement qubits, among the plurality of measurement qubits.

6. A computer program that causes a computer to execute a process comprising:

determining, based on a logical rotation angle for rotating a state of an encoded logical qubit (2) around a predetermined axis, a physical rotation angle around the predetermined axis to be applied to first physical qubits (4) that are at least some of a plurality of physical qubits (3) constituting the logical qubit (2);
instructing a quantum computer (1) including the plurality of physical qubits (3) to execute a rotation gate operation for rotating a state of each of the first physical qubits (4) of the logical qubit (2) in a logical $|+\rangle$ state around the predetermined axis by the physical rotation angle;
acquiring an error detection result of the plurality of physical qubits (3) from the quantum computer (1);
instructing the quantum computer (1) to execute a gate operation of resetting the logical qubit (2) to the logical $|+\rangle$ state and to redo the rotation gate operation upon detecting an error in a post-selection area (6) including at least the first physical qubits (4) in an area where the plurality of physical qubits (3) exist; and
instructing, upon detecting an error in an error correction area (7) other than the post-selection area (6) in the area where the plurality of physical qubits (3) exist, the quantum computer (1) to correct the detected error.

7. The computer program according to claim 6, wherein the process further includes

causing, upon detecting no error about the plurality of physical qubits (3), the quantum computer (1) to execute a gate teleportation circuit using the state of the logical qubit (2) after the rotation gate operation, and
causing, upon detecting an error in the error correction area (7), the quantum computer (1) to correct the error and to execute a gate teleportation circuit using the state of the logical qubit (2) after correcting the error.

8. The computer program according to claim 6 or 7,

wherein the post-selection area is an area including first measurement qubits capable of detecting an error of the first physical qubits (4) and second measurement qubits capable of detecting an error generated by a gate operation on the first measurement qubits, among a plurality of measurement qubits used for syndrome measurement on the plurality of physical qubits, and
wherein the error correction area is an area including remaining third measurement qubits other than the first measurement qubits and the second measurement qubits, among the plurality of measurement qubits.

9. A quantum computation control method executed by a computer, the method comprising:

determining, based on a logical rotation angle for rotating a state of a logical qubit (2) encoded with a code distance d around a predetermined axis, a physical rotation angle around the predetermined axis to be applied to d first physical qubits (4) among a plurality of physical qubits (3) constituting the logical qubit (2), the d being an integer of 2 or more; and
instructing a quantum computer (1) including the plurality of physical qubits (3) to execute a rotation gate operation of rotating a state of each of the d first physical qubits (4) around the predetermined axis by the physical rotation angle, by specifying application of an m-qubit rotation gate to a physical qubit group (4a, 4b) in which m first physical qubits among the d first physical qubits (4) are collected, the m-qubit rotation gate being to rotate states of the m first physical qubits by one rotation gate operation, the m being an integer between 2 and d, inclusive.

10. A quantum computation control method executed by a computer, the method comprising:

determining, based on a logical rotation angle for rotating a state of an encoded logical qubit (2) around a predetermined axis, a physical rotation angle around the predetermined axis to be applied to first physical qubits (4) that are at least some of a plurality of physical qubits (3) constituting the logical qubit (2);

instructing a quantum computer (1) including the plurality of physical qubits (3) to execute a rotation gate operation for rotating a state of each of the first physical qubits (4) of the logical qubit (2) in a logical $|+\rangle$ state around the predetermined axis by the physical rotation angle;

acquiring an error detection result of the plurality of physical qubits (3) from the quantum computer (1);

instructing the quantum computer (1) to execute a gate operation of resetting the logical qubit (2) to the logical $|+\rangle$ state and to redo the rotation gate operation upon detecting an error in a post-selection area (6) including at least the first physical qubits (4) in an area where the plurality of physical qubits (3) exist; and

instructing, upon detecting an error in an error correction area (7) other than the post-selection area (6) in the area where the plurality of physical qubits (3) exist, the quantum computer (1) to correct the detected error.

FIG. 1

30 QUANTUM COMPUTING SYSTEM

200

QUANTUM COMPUTER

100 CLASSICAL COMPUTER

20

NETWORK

29 TERMINAL

FIG. 2

FIG. 3

FIG. 4

PHYSICAL QUBIT

42a     42b        42n

42   LOGICAL QUBIT

42

42a     42b        42n

OCCURRENCE
OF ERROR

42

42a     42b        42n

DETECTION
AND
CORRECTION

FIG. 5

43a       43b       43c       43d

H GATE    CNOT GATE    S GATE    T GATE

CLIFFORD OPERATOR      NON−CLIFFORD OPERATOR

CLIFFORD+T

43a       43b       43c       43e

$R_Z(\theta)$

H GATE    CNOT GATE    S GATE    PHASE ROTATION GATE

BASIC GATES IN STAR ARCHITECTURE

FIG. 6

**43e** PHASE ROTATION
GATE

$R_Z(\theta_*)$

**50** GATE TELEPORTATION
CIRCUIT

GATE OPERATION **50a**
TARGET
$|\psi\rangle_L$    **50b**

$M_Z$

**50c**

RESOURCE STATE
$|m_{\theta_*}\rangle_L = |0\rangle_L + e^{-2i\theta_*}|1\rangle_L$    $X_L$    $R_Z(\theta_*)|\psi\rangle_L$ or $R_Z(-\theta_*)|\psi\rangle_L$

$M_Z = $ 📐

$R_Z(\theta_*)|\psi\rangle_L$    $R_Z(\theta_*)|\psi\rangle_L$

$|\psi\rangle_L$    $R_Z(-\theta_*)|\psi\rangle_L$    $R_Z(-3\theta_*)|\psi\rangle_L$   ...

$R_Z(\theta_*)$      $R_Z(2\theta_*)$

AVERAGE NUMBER OF TIMES OF EXECUTION OF
ROTATION UNTIL ROTATION SUCCEEDS

$$1 \times \frac{1}{2} + 2 \times \frac{1}{4} + \cdots = \sum_n n 2^{-n} = 2$$

**FIG. 7**

50　GATE TELEPORTATION
CIRCUIT

GATE OPERATION
TARGET

$|\psi\rangle_L$ ———⊕——$\boxed{M_Z}$

RESOURCE STATE

$|m_{\theta_*}\rangle_L$ ———●——$\boxed{X_L}$——— $R_Z(\theta_*)|\psi\rangle_L$ or $R_Z(-\theta_*)|\psi\rangle_L$

$Z_L = \otimes_i Z_i$　51　　　　　　　51　　　　　　　51

52

$|+\rangle_L$　　　　　　$\Pi_i R_i(\theta)|+\rangle_L$　　　　$|m_{\theta_*}\rangle_L$

$(\theta_* \text{ TO } \theta^d)$

PREPARATION OF　　TRANSVERSAL　　　SYNDROME
LOGICAL $|+\rangle$ STATE　ROTATION GATE　MEASUREMENT +
　　　　　　　　　　　　　　　　　　　　POST–SELECTION

FIG. 8

[PATTERN 1]

[PATTERN 2]

[PATTERN 3]

FIG. 9

S11

PREPARE LOGICAL |+⟩
STATE

S12

SYNDROME
MEASUREMENT

ERROR

S13

RESTART

NO ERROR S14

EXECUTE TRANSVERSAL
ROTATION GATE

S15

SYNDROME
MEASUREMENT

ERROR

S16

RESTART

NO ERROR S17

SYNDROME
MEASUREMENT

ERROR

S18

RESTART

NO ERROR S19

SUCCESSFUL
PREPARATION OF
RESOURCE STATE
(POST-SELECTION)

FIG. 10

53a PHYSICAL QUBIT

$$R_{z,i}(\theta) = \cos(\theta/2) \cdot \hat{I}_i - i \sin(\theta/2) \cdot \hat{Z}_i$$

$$\prod_i R_{z,i}(\theta) = u_{00\cdots0}II\cdots I + u_{10\cdots0}ZI\cdots I + \cdots + u_{11\cdots1}ZZ\cdots Z$$

53 LOGICAL QUBIT

TRANSVERSAL ROTATION
(GENERATION OF PAULI-STRING)

FIG. 11

TRANSVERSAL
ROTATION
(GENERATION OF
PAULI-STRING)

PAULI-STRING SAMPLING
(BRANCHING BY SYNDROME
MEASUREMENT)

[PATTERN 1]

I    I    I    $\cdots$    I

CONTRIBUTE
TO  $|m_{\theta_*}\rangle_L$

53

[PATTERN 2]

I    Z    I    $\cdots$    I

CONTRIBUTE
TO $|m_{\theta_{error}}\rangle_L$

[PATTERN n]

Z    Z    Z    $\cdots$    Z

CONTRIBUTE
TO $|m_{\theta_*}\rangle_L$

FIG. 12

$|m_{\theta_*}\rangle_L$   : IDEAL RESOURCE STATE

$|m_{\theta_{error}}\rangle_L$ : ERRONEOUS RESOURCE STATE

TRANSVERSAL ROTATION
(GENERATION OF PAULI-
STRING)

PAULI-STRING SAMPLING
(BRANCHING BY SYNDROME
MEASUREMENT)
[PATTERN 1]

POST-SELECTION
(BRANCHING BY
OCCURRENCE OF ERROR)

FIG. 13

$R_Z(\theta)$    $R_Z(\theta)$    $R_Z(\theta)$

54

ROTATION
BY $R_Z(\theta)$

EXTENDED

$R_{ZZZ}(\theta)$    $R_{ZZZ}(\theta)$    $R_{ZZZ}(\theta)$

54

MULTI-Z
ROTATION

FIG. 14

61 QUANTUM CIRCUIT $(R_{ZZZ}(\theta))$

61a 61e

61b $R_Z(\theta)$ 61d

61c

# FIG. 15

[TRANSVERSAL 1-QUBIT ROTATION]

55

(m,k,d)=(1,6,6)

↺ = I or Z

SUCCESSFUL RESOURCE STATE IS GENERATED ONLY
WHEN ALL SIX ROTATION OPERATIONS REPRESENT I OR Z

[TRANSVERSAL MULTI-QUBIT ROTATION]

55

(m,k,d)=(2,3,6)

↺ = II or ZZ

SUCCESSFUL RESOURCE STATE IS GENERATED ONLY WHEN
ALL THREE ROTATION OPERATIONS REPRESENT I OR Z

FIG. 16

$R_Z(\theta)$ $R_{ZZ}(\theta)$ 51

TRANSVERSAL
ROTATION GATE

FIG. 17

FIG. 18

FIG. 19

TRANSVERSAL
ROTATION

PAULI-STRING
OPERATION
SAMPLING

SYNDROME
MEASUREMENT

[PATTERN 1]

I   Z   I   I   I

NO ERROR

I   Z   I   I   I

55

ERROR STATE

DISTINGUISHABLE

[PATTERN 2]

I   I   I   I   I

OCCUR-
RENCE OF
ERROR

I   I   I   I   I

Z

IDEAL STATE

ERROR

FIG. 20

55

d3  m1  d1
d2
m2
m3

○ : DATA QUBIT
● : MEASUREMENT QUBIT

FIG. 21

TRANSVERSAL
ROTATION GATE

SYNDROME MEASUREMENT
CIRCUIT (FIRST TIME)

56

57    57c  57d          57g        57i
57a

m1   |0⟩   H                              H

d1          Z

d2

d3          I

m2   |0⟩

m3   |0⟩   H                              H

57b              57e   57f   57h   57j

FIG. 22

FIG. 23

O : DATA QUBIT

● : MEASUREMENT QUBIT

EP 4 651 041 A1

FIG. 24

FIG. 25

SUCCESS/FAILURE
INFORMATION

LOGICAL
ROTATION ANGLE

CLASSICAL
COMPUTER
100

32

ARBITRARY ROTATION
EXECUTION UNIT

32e

GATE TELEPORTATION
SUCCESS/FAILURE
DETERMINATION UNIT

LOGICAL
ROTATION
ANGLE × 2

32a

PHYSICAL ROTATION
ANGLE COMPUTATION
UNIT

32c

SYNDROME
MEASUREMENT
RECORDING UNIT

32d

ERROR LOCATION
ESTIMATION UNIT

SYNDROME
MEASUREMENT
INFORMATION

32b

POST-SELECTION
PASS
DETERMINATION
UNIT

OCCURRENCE
OF ERROR

32f

LOGICAL |+⟩ STATE
PREPARATION UNIT

32g

FIRST SYNDROME
MEASUREMENT UNIT

32h  PASS

TRANSVERSAL ROTATION
GATE EXECUTION UNIT
(MULTI-Z ROTATION)

32i

PHYSICAL
ROTATION
ANGLE

SECOND SYNDROME
MEASUREMENT UNIT

ESTIMATED
ERROR
INFORMATION

32j  PASS

ERROR CORRECTION UNIT

32k

GATE TELEPORTATION UNIT

200  QUANTUM
COMPUTER

ROTATED
QUANTUM STATE

ROTATION TARGET
QUANTUM STATE

FIG. 26

FIG. 27

START

DECOMPOSE
QUANTUM GATE
(CLIFFORD + $\phi$)  —— S101

INITIALIZE QUBIT  —— S102

EXECUTE
QUANTUM
CIRCUIT  —— S103

TRANSMIT
COMPUTATION
RESULT  —— S104

END

# FIG. 28

FIG. 29

RESOURCE STATE
GENERATION PROCESS
START

COMPUTE PHYSICAL ROTATION ANGLE $\theta$ — S301

TRANSMIT PREPARATION COMMAND FOR LOGICAL $|+\rangle$ STATE TO QUANTUM COMPUTER — S302

ACQUIRE SYNDROME MEASUREMENT RESULT — S303

IS THERE ERROR IN POST-SELECTION AREA? — S304 — YES

NO

TRANSMIT EXECUTION COMMAND FOR TRANSVERSAL ROTATION GATE BASED ON MULTI-Z ROTATION TO QUANTUM COMPUTER — S305

ACQUIRE SYNDROME MEASUREMENT RESULT — S306

IS THERE ERROR IN POST-SELECTION AREA? — S307 — YES

NO

ACQUIRE SYNDROME MEASUREMENT RESULT — S308

IS THERE ERROR IN POST-SELECTION AREA? — S309 — YES

NO

ACQUIRE "d-2" SYNDROME MEASUREMENT RESULTS — S310

IS THERE ERROR IN ERROR CORRECTION AREA? — S311 — NO

YES

TRANSMIT ERROR CORRECTION COMMAND TO QUANTUM COMPUTER — S312

END

FIG. 30

71 LOGICAL QUBIT

OPERATION TARGET OF
TRANSVERSAL ROTATION GATE

q0 q1 q2 q3 q4 q5 q6

FIG. 31

o : DATA QUBIT

● : MEASUREMENT QUBIT

72 QUANTUM
CIRCUIT

72a 72c 72g 72i

q0

q1

72e

q2 $R_Z(\theta)$

$R_{Z_0 Z_2}(\theta)$

q3

72b 72d 72h 72j

q4

q5

72f

q6 $R_Z(\theta)$

$R_{Z_4 Z_6}(\theta)$

FIG. 32

FIG. 33

FIG. 34

## EUROPEAN SEARCH REPORT

**Application Number**

EP 25 17 5823

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | Y. AKAHOSHI ET AL: "Partially fault-tolerant quantum computing architecture with error-corrected Clifford gates and space-time efficient analog rotations", ARXIV.ORG, CORNELL UNIVERSITY LIBRARY, 201 OLIN LIBRARY CORNELL UNIVERSITY ITHACA, NY 14853, 23 March 2023 (2023-03-23), XP091466791, DOI: 10.48550/arXiv.2303.13181 * sections II-IV and VII * | 1-10 | INV. G06N10/70 G06N10/20 |
| A,D | H. CHOI ET AL: "Fault tolerant non-Clifford state preparation for arbitrary rotations", ARXIV.ORG, CORNELL UNIVERSITY LIBRARY, 201 OLIN LIBRARY CORNELL UNIVERSITY ITHACA, NY 14853, 30 March 2023 (2023-03-30), XP091471799, DOI: 10.48550/arXiv.2303.17380 * sections II-IV * | 1-10 | |
| A | J. VAN DE WETERING: "Constructing quantum circuits with global gates", NEW JOURNAL OF PHYSICS, vol. 23, no. 4, 043015, 7 April 2021 (2021-04-07), XP093222353, DOI: 10.1088/1367-2630/abf1b3 * section 4 * | 1-10 | **TECHNICAL FIELDS SEARCHED (IPC)** <br><br> G06N |
| A | D. LITINSKI: "A game of surface codes: large-scale quantum computing with lattice surgery", ARXIV.ORG, CORNELL UNIVERSITY LIBRARY, 201 OLIN LIBRARY CORNELL UNIVERSITY ITHACA, NY 14853, 3 February 2019 (2019-02-03), XP081022248, DOI: 10.48550/arXiv.1808.02892 * the whole document * | 1-10 | |

The present search report has been drawn up for all claims

| Place of search | Date of completion of the search | Examiner |
|---|---|---|
| The Hague | 19 September 2025 | Douarche, Nicolas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# EP 4 651 041 A1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **YUTARO AKAHOSHI** ; **KAZUNORI MARUYAMA** ; **HIROTAKA OSHIMA** ; **SHINTARO SATO** ; **KEISUKE FUJII**. Partially Fault-tolerant Quantum Computing Architecture with Error-corrected Clifford Gates and Space-time Efficient Analog Rotations. *arXiv:2303.13181v1*, 23 March 2023

- **HYEONGRAK CHOI** ; **FREDERIC T. CHONG** ; **DIRK ENGLUND** ; **YONGSHAN DING**. Fault Tolerant Non-Clifford State Preparation for Arbitrary Rotations. *arXiv:2303.17380v1*, 30 March 2023